# EUROPEAN PATENT SPECIFICATION

(11) **EP 4 283 520 B1**
(45) Date of publication and mention of the grant of the patent: **04.11.2026**
(21) Application number: 22758856.3
(22) Date of filing: 22.02.2022
(51) Int. Cl.: G06N 3/0464, G06N 3/082, G06N 3/084

(54) **PRUNING PROCESSING METHOD FOR CONVOLUTIONAL NEURAL NETWORK, DATA PROCESSING METHOD AND DEVICES**
BESCHNEIDUNGSVERARBEITUNGSVERFAHREN FÜR NEURONALES FALTUNGSNETZWERK, DATENVERARBEITUNGSVERFAHREN UND VORRICHTUNGEN
PROCÉDÉ DE TRAITEMENT PAR ÉLAGAGE POUR RÉSEAU NEURONAL CONVOLUTIF, PROCÉDÉ ET DISPOSITIFS DE TRAITEMENT DE DONNÉES

(30) Priority: 27.02.2021 CN 202110221926
(43) Date of publication of application: 29.11.2023
(73) Proprietor: Huawei Technologies Co., Ltd., Shenzhen, Guangdong 518129 (CN)
(72) Inventor: TANG, Yehui, Shenzhen, Guangdong 518129 (CN); XU, Yixing, Shenzhen, Guangdong 518129 (CN); WANG, Yunhe, Shenzhen, Guangdong 518129 (CN); XU, Chunjing, Shenzhen, Guangdong 518129 (CN)
(74) Representative: Pfenning, Meinig & Partner mbB
(86) International application number: PCT/CN2022/077245
(87) International publication number: WO 2022/179492

(56) References cited:
- CN-A- 109 635 927
- CN-A- 111 612 143
- CN-A- 112 163 628
- CN-A- 112 183 747
- CN-A- 113 065 636
- US-A1- 2020 311 551
- XITONG GAO ET AL: "Dynamic Channel Pruning: Feature Boosting and Suppression", ARXIV.ORG, CORNELL UNIVERSITY LIBRARY, 201 OLIN LIBRARY CORNELL UNIVERSITY ITHACA, NY 14853, 12 October 2018 (2018-10-12), XP081064804
- JIAN-HAO LUO ET AL: "AutoPruner: An End-to-End Trainable Filter Pruning Method for Efficient Deep Model Inference", ARXIV.ORG, CORNELL UNIVERSITY LIBRARY, 201 OLIN LIBRARY CORNELL UNIVERSITY ITHACA, NY 14853, 23 May 2018 (2018-05-23), XP081015241
- JINYANG GUO ET AL: "Channel Pruning Guided by Classification Loss and Feature Importance", ARXIV.ORG, CORNELL UNIVERSITY LIBRARY, 201 OLIN LIBRARY CORNELL UNIVERSITY ITHACA, NY 14853, 15 March 2020 (2020-03-15), XP081621650
- HANG LI ET AL: "Feature Statistics Guided Efficient Filter Pruning", ARXIV.ORG, CORNELL UNIVERSITY LIBRARY, 201 OLIN LIBRARY CORNELL UNIVERSITY ITHACA, NY 14853, 21 May 2020 (2020-05-21), XP081683231

## Description

### TECHNICAL FIELD

This application relates to the field of machine learning, and in particular, to a data processing method, a task processing system, a computer-readable storage medium, and a computer program product.

### BACKGROUND

In recent years, convolutional neural networks are widely applied to fields such as computer vision (for example, image classification, target detection, and video analysis), machine translation, and speech recognition. However, with development of convolutional neural network technologies, a design of a network structure of the convolutional neural network becomes increasingly complex, resulting in a large model and high calculation complexity of the convolutional neural network. This restricts application of the convolutional neural network on hardware resources with limited computing capabilities and storage space, for example, a mobile device (such as a mobile phone) and a wearable device. Therefore, to apply the convolutional neural network to a small mobile device with limited computing resources, compression and acceleration need to be performed on the convolutional neural network. A common model compression method is to perform pruning processing on the convolutional neural network.

Pruning reduces a model size and model calculation complexity by reducing a quantity of convolution kernels (which may also be referred to as a quantity of channels) at a convolutional layer. In a common pruning method, importance of convolution kernels is determined by using a static channel control factor. A training process of the pruning method is mainly as follows: First, the channel control factor is set or added to a convolutional neural network, where the channel control factor is represented by using a one-dimensional vector, each element in the one-dimensional vector corresponds to one convolution kernel of the convolutional neural network, and a value of each element represents importance of a corresponding convolution kernel; and the channel control factor of the convolutional neural network is trained, an unimportant convolution kernel is deleted (that is, pruned) based on a value of the channel control factor, and the pruned convolutional neural network is iteratively trained.

Gao, Xitong, et al. (2018), "Dynamic channel pruning: Feature boosting and suppression.", arXiv preprint arXiv:1810.05331, describes a method to predictively amplify salient convolutional channels and skip unimportant ones at run-time.

The foregoing conventional pruning method is a pruning method for permanently deleting a channel. A "static" convolutional neural network can be obtained by using the method. The pruned convolutional neural network ignores different requirements of different input data for network parameters and capacities. Actually, the importance of the convolution kernel depends largely on the input data.

### SUMMARY

The subject matter of the present invention is defined by the appended claims. Further embodiments not covered by the claims are provided for background information to promote a deeper understanding of the invention. Embodiments of this application provide a data processing method, a task processing system, a computer-readable storage medium, and a computer program product according to the independent claims.

### BRIEF DESCRIPTION OF DRAWINGS

FIG. 1 is a schematic diagram of a structure of an artificial intelligence main framework according to an embodiment of this application;
FIG. 2 is a diagram of a system architecture of a task processing system according to an embodiment of this application;
FIG. 3 is a schematic flowchart of a convolutional neural network pruning processing method according to an embodiment of this application;
FIG. 4 is a schematic diagram of dynamically balancing complexity of a sample and complexity of a network in a convolutional neural network pruning processing method according to an embodiment of this application;
FIG. 5 is a scenario application diagram according to an embodiment of this application;
FIG. 6 is another schematic flowchart of a convolutional neural network pruning processing method according to an embodiment of this application;
FIG. 7 is a schematic diagram of customizing a corresponding sub-network structure for each training sample by using manifold information of a training sample according to an embodiment of this application;
FIG. 8 is a schematic flowchart of a data processing method according to an embodiment of this application;
FIG. 9 is a diagram of comparison between results, obtained through classification by using a pruning method according to this application, of a ResNet network on an ImageNet dataset, and results, obtained through classification by using an existing pruning method, of the ResNet network on the ImageNet dataset;
FIG. 10 is a diagram of comparison between results, obtained through classification by using a pruning method according to this application, of a MobileNetV2 network on an ImageNet dataset, and results, obtained through classification by using an existing pruning method, of the MobileNetV2 network on the ImageNet dataset;
FIG. 11 is a diagram of comparison between results of a pruning method according to this application on a CIFAR-10 dataset and results of an existing pruning method on the CIFAR-10 dataset;
FIG. 12 is a schematic diagram of a training device according to an embodiment of this application;
FIG. 13 is a schematic diagram of an execution device according to an embodiment of this application;
FIG. 14 is another schematic diagram of a training device according to an embodiment of this application;
FIG. 15 is another schematic diagram of an execution device according to an embodiment of this application; and
FIG. 16 is a schematic diagram of a structure of a chip according to an embodiment of this application, not covered by the claims.

### DESCRIPTION OF EMBODIMENTS

Embodiments of this application provide a data processing method, a task processing system, a computer-readable storage medium, and a computer program product. Sparse training is performed on a convolutional neural network by constructing a new objective loss function. The newly constructed objective loss function includes two sub-loss functions. A first sub-loss function is used to measure complexity of a training sample, and a second sub-loss function is used to measure complexity of a pruned sub-network that processes the training sample. The complexity of the network is obtained based on a channel importance function and a dynamic weight. When a value of the first sub-loss function does not reach a first threshold, the complexity of the training sample is high, a value of the dynamic weight is small (inverse correlation), sparsity of the channel importance function obtained through training is small, and less pruning is performed. In this way, each training sample is flexibly pruned.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover a non-exclusive inclusion, so that a process, method, system, product, or device that includes a series of units is not limited to those units, but may include other units not expressly listed or inherent to such a process, method, product, or device.

Embodiments of this application relate to a large amount of neural network related knowledge. To better understand the solutions in embodiments of this application, the following first describes related terms and concepts that may be used in embodiments of this application. It should be understood that explanations of related concepts may be limited due to specific situations of the embodiments of this application, but it does not mean that this application can only be limited to the specific situations. There may be differences in the specific situations of different embodiments. Details are not limited herein.

### (1) Neural network

The neural network may include a neuron, and may be understood as a neural network including an input layer, a hidden layer, and an output layer. Usually, a first layer is the input layer, a last layer is the output layer, and a middle layer is the hidden layer. A neural network including a plurality of hidden layers is referred to as a deep neural network (deep neural network, DNN). Work of each layer in the neural network may be described by using a mathematical expression ${y}^{⇀} = a \left(W⋅{x}^{⇀}+b\right)$*.* From a physical perspective, the work of each layer in the neural network may be understood as completing transformation from input space to output space (that is, from row space to column space of a matrix) by performing five operations on the input space (a set of input vectors). The five operations include: 1. dimension increasement/dimension reduction; 2. increasing/decreasing; 3. rotation; 4. translation; and 5. "bending". The operations 1, 2, and 3 are completed by *"* $W ⋅ {x}^{⇀}$*",* the operation 4 is completed by "+b", and the operation 5 is implemented by "*a*( )". The word "space" is used herein for expression because a classified object is not a single thing, but a type of things. Space is a collection of all individuals of such type of things. *W* is a weight matrix, and each value in the matrix indicates a weight value of one neuron in the neural network at this layer. The matrix *W* determines space transformation from the input space to the output space described above. In other words, *W* at each layer of the neural network controls how to transform space. An objective of training a neural network is to finally obtain weight matrices of all layers of a trained neural network. Therefore, a training process for the neural network is essentially a manner of learning control of space transformation, and more specifically, learning a weight matrix.

### (2) Convolutional neural network (convolutional neural network, CNN)

The CNN is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, image information obtained through same learning can be used for all locations in the image. At a same convolutional layer, a plurality of convolution kernels may be used to extract different image information. Usually, a larger quantity of convolution kernels indicates richer image information reflected by a convolution operation.

The convolution kernel may be initialized in a form of a random-size matrix. In a process of training the convolutional neural network, the convolution kernel may obtain an appropriate weight through learning. In addition, a direct benefit brought by weight sharing is that connections between layers in the convolutional neural network are reduced and an overfitting risk is lowered.

### (3) Loss function (loss function)

During training of the neural network, because it is expected that an output of the neural network is as close as possible to a value that is actually expected to be predicted, a current prediction value of the network may be compared with a target value that is actually expected, and then a matrix vector at each layer of the neural network is updated based on a difference between the current prediction value and the target value (there is usually an initialization process before the first update, that is, a parameter is preconfigured for each layer of the neural network). For example, if the prediction value of the network is large, the matrix vector is adjusted to lower the prediction value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations for measuring the difference between the predicted value and the target value. The loss function is used as an example. A higher output value (loss) of the loss function indicates a larger difference. Therefore, training of the neural network is a process of minimizing the loss as much as possible.

### (4) Back propagation algorithm

During training of the neural network, an error back propagation (back propagation, BP) algorithm may be used to correct a value of a parameter in an initial neural network model, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

### (5) Regularization (regularization)

The regularization is a type of method that reduces overfitting by restricting complexity of a network model.

### (6) Manifold (manifold)

The manifold is topological space that can be spatialized locally by Euclidean. It is a generalization of concepts of curves and surfaces in Euclidean space. Specifically, the manifold means that data that can be observed is actually mapped from a low-dimensional manifold to high-dimensional space. Due to limitation of internal data features, some high-dimensional data may generate dimension redundancy. Actually, the data can be uniquely represented in a low dimension. Intuitively, the manifold is like dd-dimensional space, which is a result obtained by distorting mm-dimensional space, where (m>d) (m>d). It should be noted that the manifold is not a shape, but space. For example, a piece of cloth may be seen as a two-dimensional plane, and this is two-dimensional space. Now the piece of cloth is twisted (three-dimensional space), and the piece of cloth becomes a manifold. Certainly, the piece of cloth is also a manifold without being twisted. The Euclidean space is a special case for manifolds. In this embodiment of this application, manifold information (that is, complexity of a sample and a similarity between samples) of sample space may be used to explore a relationship between the samples.

The following describes embodiments of this application with reference to the accompanying drawings. A person of ordinary skill in the art may learn that, with development of technologies and emergence of a new scenario, the technical solutions according to embodiments of this application are also applicable to a similar technical problem.

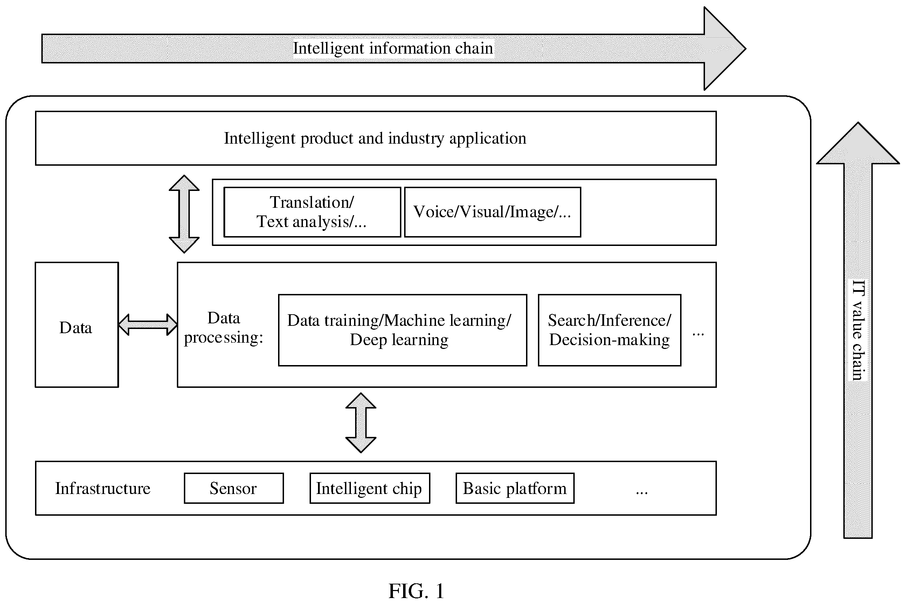

An overall working procedure of an artificial intelligence system is first described. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry in a process from an underlying infrastructure and information (providing and processing technology implementation) of human intelligence to a systemic industrial ecology.

### (1) Infrastructure

The infrastructure provides computing capability support for the artificial intelligence system, implements communication with the external world, and implements support by using a basic platform. External communication is performed by using a sensor. A computing capability is provided by an intelligent chip (a hardware acceleration chip, for example, a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system for computation, where the distributed computing system is provided by the basic platform.

### (2) Data

Data at an upper layer of the infrastructure indicates a data source in the field of artificial intelligence. The data relates to a graph, an image, a voice, and text, further relates to Internet of things data of a conventional device, and includes service data of an existing system and perception data such as force, displacement, a liquid level, a temperature, and humidity.

### (3) Data processing

Data processing usually includes manners such as data training, machine learning, deep learning, searching, inference, and decision-making.

Machine learning and deep learning may mean performing symbolized and formalized intelligent information modeling, extraction, preprocessing, training, and the like on data.

Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

### (4) General capabilities

After data processing mentioned above is performed on data, some general capabilities may further be formed based on a data processing result, for example, an algorithm or a general system, such as translation, text analysis, computer vision processing, speech recognition, and image recognition.

### (5) Intelligent product and industry application

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

Embodiments of this application may be applied to an optimized design of a convolutional neural network, and specifically, may be applied to an optimized design of a loss function of the convolutional neural network. The convolutional neural network whose loss function is optimized in this application may be specifically applied to subdivision fields of the field of artificial intelligence, for example, the image processing field and the semantic analysis field in the computer vision field. Specifically, with reference to FIG. 1, in this embodiment of this application, data in a dataset obtained by the infrastructure may be a plurality of different types of data (which may also be referred to as training samples or training data, where a plurality of training samples form the training set) obtained by using sensors such as a camera and a radar. The training sample in the training set may be a plurality of pieces of image data, a plurality of pieces of video or text date (not covered by the claims), audio data, provided that the training set meets a function used to perform iterative training on the convolutional neural network.

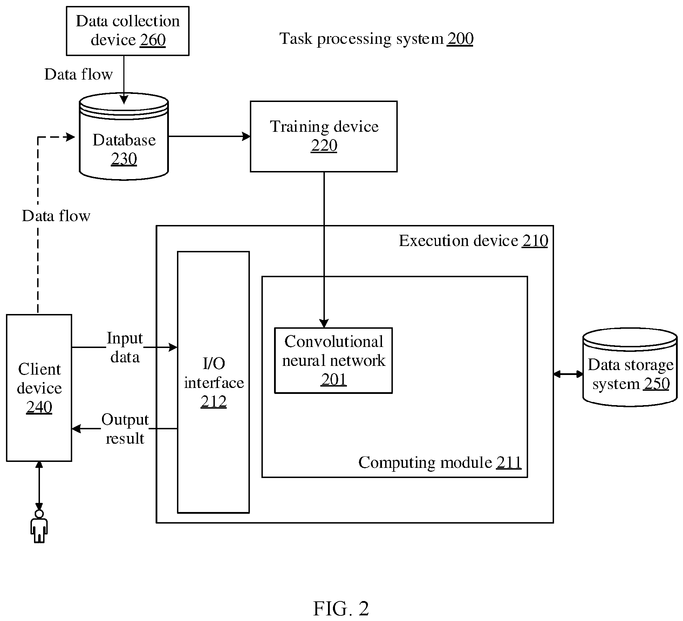

For ease of understanding of this solution, the following describes a framework of a task processing system provided in an embodiment of this application with reference to FIG. 2. FIG. 2 is a diagram of a system architecture of a task processing system according to an embodiment of this application. In FIG. 2, the task processing system 200 includes an execution device 210, a training device 220, a database 230, a client device 240, a data storage system 250, and a data collection device 260. The execution device 210 includes a computing module 211 and an input/output (I/O) interface 212.

In a training phase, the data collection device 260 may be configured to: obtain an open-source large-scale dataset (that is, a training set) required by a user, and store the training set into the database 230. The training set may include a plurality of pieces of training data (or referred to as training samples). The training data may be image data, video or text data (not covered by the claims), or may be audio data; and is specifically related to a to-be-processed target task. This is not limited herein. The training device 220 performs sparse training on a convolutional neural network 201 in this application based on the maintained training set in the database 230 (that is, performs pruning processing on the convolutional neural network). The convolutional neural network 201 that is obtained through training and that can implement dynamic pruning based on each piece of training data (which may also be referred to as the training sample) may be applied to different systems or devices (that is, the execution device 210), which may be specifically edge devices or terminal-side devices, for example, mobile phones, tablet computers, laptops, monitoring systems (for example, cameras), or security systems.

In an inference phase, the execution device 210 may invoke data, code, and the like in the data storage system 250, or may store data, instructions, and the like in the data storage system 250. The data storage system 250 may be disposed in the execution device 210, or the data storage system 250 may be an external memory relative to the execution device 210. The computing module 211 implements dynamic pruning for each piece of different input data by using the convolutional neural network 201 obtained through sparse training.

In FIG. 2, the I/O interface 212 is configured for the execution device 210, to exchange data with an external device. A "user" may input data to the I/O interface 212 by using the client device 240. For example, the client device 240 may be a camera device of a monitoring system. An image photographed by the camera device is input to the computing module 211 of the execution device 210 as input data. The computing module 211 detects the input image to obtain a detection result (or a prediction result). Then, the detection result (or the prediction result) is output to the camera device, or is directly displayed on a display interface (if the execution device 210 has the display interface) of the execution device 210. In addition, in some implementations of this application, the client device 240 may alternatively be integrated into the execution device 210. For example, when the execution device 210 is a mobile phone, a target task may be directly obtained by using the mobile phone (for example, an image may be photographed by a camera of the mobile phone, or target voice may be recorded by a recording module of the mobile phone), or may be received from another device (for example, another mobile phone). Then, the computing module 211 in the mobile phone detects (or predicts) the target task to obtain a detection result (or a prediction result), and the detection result (or the prediction result) is directly presented on a display interface of the mobile phone. Product forms of the execution device 210 and the client device 240 are not limited herein.

It should be further noted that the sparse training of the convolutional neural network 201 in this embodiment of this application may be implemented on a cloud side. For example, the training device 220 on the cloud side (the training device 220 may be disposed on one or more servers or virtual machines) may obtain a training set, and perform sparse training on the convolutional neural network based on a plurality of groups of training data (or referred to as training samples) in the training set to obtain the trained convolutional neural network 201. Then, the trained convolutional neural network 201 is sent to the execution device 210 for application. For example, if the target task is a task related to image data, for example, an image enhancement task not covered by the claims, the trained convolutional neural network 201 may be sent to the execution device 210 to perform image enhancement processing such as image super-resolution reconstruction, deblurring, and rain removal. If the target task is a task related to audio data, or text data (not covered by the claims), the trained convolutional neural network 201 may be sent to the execution device 210 to process the related task. For example, in the system architecture corresponding to FIG. 2, the training device 220 performs sparse training on the convolutional neural network, and then sends the trained convolutional neural network 201 to the execution device 210 for use. The training of the convolutional neural network 201 in the foregoing embodiment may also be implemented on a terminal side, that is, the training device 220 may be located on the terminal side. For example, a terminal device (such as a mobile phone or a smart watch) or a wheeled mobile device (such as a self-driving vehicle or an assisted driving vehicle) obtains a training set, and performs sparse training on the convolutional neural network based on a plurality of groups of training data in the training set to obtain the trained convolutional neural network 201. The trained convolutional neural network 201 may be directly used by the terminal device, or may be sent by the terminal device to another device for use. Specifically, this embodiment of this application imposes no limitation on a device (on the cloud side or the terminal side) on which sparse training is performed on the convolutional neural network 201.

With reference to the foregoing description, embodiments of this application provide a convolutional neural network pruning processing method and a data processing method, which are respectively applied to a training phase and an inference phase of a convolutional neural network. The following separately provides description.

### 1. Training phase

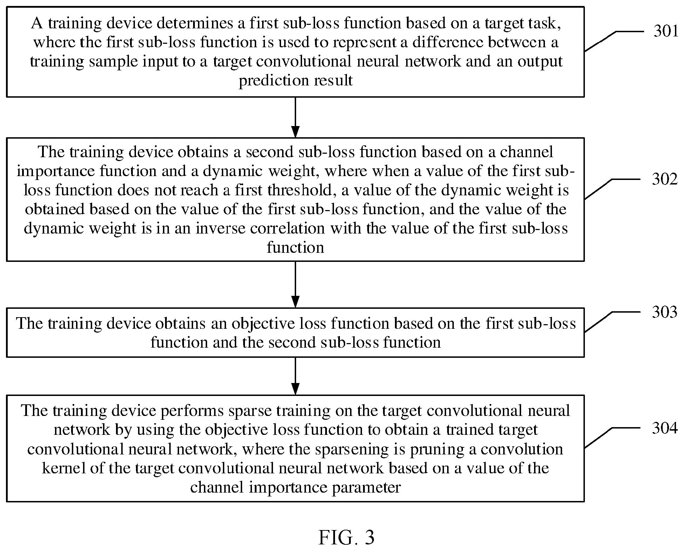

In this embodiment of this application, the training phase is a process in which the training device 220 in FIG. 2 performs a training operation on the convolutional neural network 201 by using the training data in the training set, that is, a process of performing pruning processing on the convolutional neural network by using the loss function constructed in this application. FIG. 3 is a schematic flowchart of a convolutional neural network pruning processing method according to an embodiment of this application. The method specifically includes the following steps.

301: A training device determines a first sub-loss function based on a target task, where the first sub-loss function represents a difference between a training sample input to a target convolutional neural network and an output prediction result.

First, the training device may first select, from a plurality of existing types of convolutional neural networks, a convolutional neural network that is suitable for processing the target task, or may construct a network structure of a convolutional neural network that meets the target task. The selected convolutional neural network or the self-constructed convolutional neural network may be referred to as the target convolutional neural network. It should be noted that, in some implementations of this application, if the target convolutional neural network is selected from the existing convolutional neural networks, a network parameter of the target convolutional neural network may be obtained through random initialization. Alternatively, the target convolutional neural network may be a pre-trained convolutional neural network. In a pre-training process, the target convolutional neural network may be trained in advance on a cloud side, so that a good initialized parameter can be obtained. Specifically, whether the target convolutional neural network is trained in advance is not limited in this embodiment of this application.

A purpose of inputting the training sample to the target convolutional neural network is to make correct prediction, and corresponding sub-loss functions (that is, the first sub-loss function) may be determined based on different target tasks. Therefore, the training device determines the first sub-loss function based on the target task, where the first sub-loss function represents a difference between a training sample input to a convolutional neural network (that is, the target convolutional neural network) on which pruning processing is to be performed and an output prediction result. For example, when the target task is a classification task, the first sub-loss function may be a cross-entropy loss function. When the target task is another specific task (for example, a regression task not covered by the claims), the first sub-loss function may be a common loss function such as a perceptual loss function or a hinge loss function. Selection of the first sub-loss function is specifically related to a type of the target task, and a specific representation form of the first sub-loss function is determined by the type of the target task. This is not specifically limited in this embodiment of this application.

In this embodiment of this application, a large value of the first sub-loss function indicates poor fitting effect of the target convolutional neural network on the currently input training sample. Therefore, the first sub-loss function substantially measures complexity of the currently input training sample.

It should be noted that, in this embodiment of this application, for ease of understanding, the first sub-loss function may be represented by 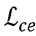 (***x**ᵢ,* **θ**), where **x***ᵢ* represents an input i^{th} training sample, θ is the network parameter of the entire target convolutional neural network, and 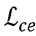 (.) is an expression of the first sub-loss function.

302: The training device obtains a second sub-loss function based on a channel importance function and a dynamic weight, where when a value of the first sub-loss function does not reach a first threshold, a value of the dynamic weight is obtained based on the value of the first sub-loss function, and the value of the dynamic weight is in an inverse correlation with the value of the first sub-loss function.

In addition to determining the first sub-loss function based on the target task, the training device further obtains a second sub-loss function based on the channel importance function and the dynamic weight. The channel importance function may be used to represent an importance degree that is of each convolution kernel (one convolution kernel may also be referred to as a channel) in the target convolutional neural network and that is on the training sample. The channel importance function may be represented by **π***^{l}*(**x***ᵢ*), and *l* represents any layer of the target convolutional neural network, that is *l* ∈ [1, *L*], where L is a total quantity of layers of the target convolutional neural network. **π***^{l}*(**x***ᵢ*) indicates, for an input training sample **x***ᵢ*, an importance degree that is of a convolution kernel at an l^{th} layer of the target convolutional neural network and that is on the training sample **x***ᵢ*, where the channel importance function **π***^{l}*(**x***ᵢ*) may be represented by using a vector. Then, the training device may perform dynamic pruning based on an importance degree that is of each convolution kernel and that is on any training sample. For example, a threshold (which may be referred to as a second threshold) may be set. When a value of the importance degree is less than the set second threshold (for example, the second threshold may be set to 0), it is considered that the convolution kernel corresponding to the value of the importance degree is not important for the current training sample **x***ᵢ*, and may be pruned. For each training sample, a value of the channel importance function **π***^{l}*(**x***ᵢ*) may be different, and therefore, sparsity of the channel importance function **π***^{l}*(**x***ᵢ*) (for example, when the second threshold is 0, more elements 0 in the vector representing the channel importance function **π***^{l}*(**x***ᵢ*) indicate that more elements 0 need to be pruned, and an obtained sub-network is sparser) determines a quantity of convolution kernels that process the current training sample **x***ᵢ* and that are in the target convolutional neural network. A large value of the channel importance function **π***^{l}*(**x***ᵢ*) corresponds to a compact sub-network (indicating that less pruning is performed).

Therefore, in this embodiment of this application, essentially, complexity of the target convolutional neural network for each training sample is measured based on the channel importance function **π***^{l}*(**x***ᵢ*). Specifically, that the channel importance function **π***^{l}*(**x***ᵢ*) is sparser indicates more pruning needs to be performed, and a sub-network obtained by pruning the target convolutional neural network is simpler. That the channel importance function **π***^{l}*(**x***ᵢ*) is denser indicates that less pruning needs to be performed, and a sub-network obtained by pruning the target convolutional neural network is more complex.

In addition, in this embodiment of this application, when the value of the first sub-loss function does not reach the preset threshold (which may be referred to as the first threshold), the value of the dynamic weight is obtained based on the value of the first sub-loss function. In this embodiment of this application, the dynamic weight may be represented by *λ*(**x***ᵢ*, **θ**), and the first threshold may be represented by C. Similarly, **x***ᵢ* is the input training sample, and θ is the network parameter of the entire target convolutional neural network. *λ*(.) is an expression of the dynamic weight, and the dynamic weight may also be referred to as an adaptive penalty weight, which may be specifically defined as shown in the following formula (1): $λ \left({x}_{i}, θ\right) = λ ′ ⋅ \frac{C - {L}_{ce} \left({x}_{i}, θ\right)}{C} , and {L}_{ce} \left({x}_{i}, θ\right) \leq C$ (1)

*λ*' is a set trade-off coefficient (which is a hyperparameter and may be referred to as a second preset coefficient); C is the preset threshold (which may be referred to as the first threshold); 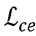 (**x***ᵢ*, **θ**) is the value of the first sub-loss function for the training sample **x***ᵢ*; *C -* 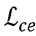 (***x**ᵢ*, **θ**) represents a difference between the first threshold C and the first sub-loss function (***x**ᵢ*, **θ**), where the difference may be referred to as a first difference; and $\frac{C - {L}_{ce} \left({x}_{i}, θ\right)}{C}$ may be referred to as a first ratio. In the formula (1), (***x**ᵢ*, **θ**) ≤ C indicates that the value of the first sub-loss function for the training sample **x***ᵢ* does not exceed the first threshold C. This indicates that the training sample **x***ᵢ* is not complex, and corresponding pruning may be performed on the target convolutional neural network.

In addition, it can be learned from the foregoing formula (1) that because (***x**ᵢ*, **θ**) ≤ C, $0 < \frac{C - {L}_{ce} \left({x}_{i}, θ\right)}{C} < 1$, that is, 0<*λ*(**x***ᵢ*, **θ**)<*λ*'. Therefore, the value of *λ*(**x***ᵢ*, **θ**) is related to 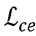 (***x**ᵢ*, **θ**), that is, *λ*(**x***ᵢ*, **θ**) is obtained based on 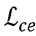 (***x**ᵢ*, **θ**). In addition, because the value of (***x**ᵢ*, **θ**) may reflect complexity of the input training sample **x***ᵢ*, high complexity of the input training sample **x***ᵢ* indicates a large value of 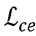 (***x**ᵢ*, **θ**). In this case, a value of $\frac{C - {L}_{ce} \left({x}_{i}, θ\right)}{C}$ is small. Because *λ*' is the hyperparameter, *λ*(**x***ᵢ*, **θ**) is small. It can be learned that when the value of the first sub-loss function 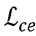 (***x**ᵢ*, **θ**) does not reach the first threshold (that is, 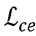 (***x**ᵢ*, **θ**) ≤ *C*), the value of the dynamic weight is in the inverse correlation with the value of the first sub-loss function.

Based on the foregoing description, because the second sub-loss function is obtained based on the channel importance function and the dynamic weight, in some implementations of this application, the second sub-loss function may be specifically obtained by multiplying the channel importance function by the dynamic weight, and an expression of the second sub-loss function may be represented in the following formula (2): $λ \left({x}_{i}, θ\right) ⋅ {\sum }_{l = 1}^{L} {\left‖{π}^{l}\left({x}_{i}\right)\right‖}_{1}$ (2)

∥·∥ represents a *ℓ*₁ norm, ∥ **π***^{l}*(**x***ᵢ*) ∥₁ ≥ 0 is always true, and *λ*(**x***ᵢ*, **θ**) is shown in the foregoing formula (1). Details are not described herein again.

303: The training device obtains an objective loss function based on the first sub-loss function and the second sub-loss function.

After determining the expression of the first sub-loss function and the expression of the second sub-loss function, the training device obtains the objective loss function based on the first sub-loss function and the second sub-loss function. Specifically, in some implementations of this application, the objective loss function may be obtained by adding the first sub-loss function and the second sub-loss function. Therefore, in this embodiment of this application, an expression of the objective loss function may be represented in the following formula (3): ${L}_{T} = {min}_{θ} \left({\sum }_{i = 1}^{N} \left({L}_{ce}\left({x}_{i}, θ\right)+λ\left({x}_{i}, θ\right)⋅{\sum }_{l = 1}^{L} {\left‖{π}^{l}\left({x}_{i}\right)\right‖}_{1}\right)\right)$ (3)

N is a total quantity of training samples in the training set, **x***ᵢ* is the currently input training sample, 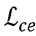 **(*****x**ᵢ*, **θ**) is the first sub-loss function, and $λ \left({x}_{i}, θ\right) ⋅ {\sum }_{l = 1}^{L} {\left‖{π}^{l}\left({x}_{i}\right)\right‖}_{1}$ is the second sub-loss function. In a case of 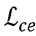 (**x***ᵢ*, **θ**) ≤ *C*, *λ*(**x***ᵢ*, **θ**) is shown in the foregoing formula (1), and ${min}_{θ}$ represents that an objective loss function for the N input training samples is minimized.

It can be learned from the foregoing formula (1) to formula (3) that, in the case of 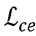 (**x***ᵢ*, **θ**) ≤ C, a large value of 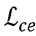 (***x**ᵢ*, **θ**) reflects a complex input training sample. In this case, the value of $\frac{C - {L}_{ce} \left({x}_{i}, θ\right)}{C}$ is small, *λ*(**x***ᵢ*, **θ**) is also small, and a proportion of ${{\sum }_{l = 1}^{L} \left‖{π}^{l}\left({x}_{i}\right)\right‖}_{1}$ in the objective loss function L_{T} represented by formula (3) is small. This indicates that a value of ${{\sum }_{l = 1}^{L} \left‖{π}^{l}\left({x}_{i}\right)\right‖}_{1}$ is not important, and pruning may not be performed. On the contrary, a simple input training sample indicates a large value of *λ*(**x***ᵢ*, **θ**). This indicates that the value of ${\sum }_{l = 1}^{L} ∥$ **π***^{l}*(**x**ᵢ) ∥₁ has great impact on the entire objective loss function L_{T}. Because ${{\sum }_{l = 1}^{L} \left‖{π}^{l}\left({x}_{i}\right)\right‖}_{1}$ may reflect complexity of a network, a small value of ${{\sum }_{l = 1}^{L} \left‖{π}^{l}\left({x}_{i}\right)\right‖}_{1}$ indicates that a sub-network that needs to be obtained is sparse, and that pruning needs to be performed.

In conclusion, a complex training sample input to the target convolutional neural network indicates a large value of the first sub-loss function, a small dynamic weight of the channel importance function, and a small proportion of the second sub-loss function in the entire objective loss function. In this case, less pruning (even no pruning) may be performed on the target convolutional neural network, and a sub-network (that is, the pruned target convolutional neural network) that is finally used to process the training sample is complex. A simple training sample input to the target convolutional neural network indicates a small value of the first sub-loss function, a large dynamic weight of the channel importance function, and a large proportion of the second sub-loss function in the entire objective loss function. In this case, more pruning may be performed on the target convolutional neural network (which has significant impact on the entire objective loss function), and a sub-network (that is, the pruned target convolutional neural network) that is finally used to process the training sample is simple.

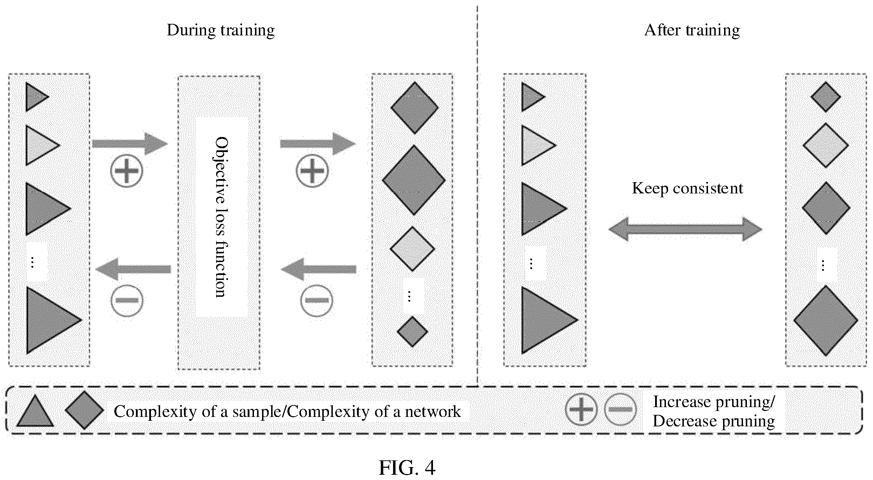

For ease of understanding, FIG. 4 is a schematic diagram of dynamically balancing complexity of a sample and complexity of a network in a convolutional neural network pruning processing method according to an embodiment of this application. Specifically, the complexity of the sample and the complexity of the network can be dynamically balanced by using the objective loss function constructed in embodiments of this application. When a more complex sample (as shown in FIG. 4, a larger triangle area indicates a more complex sample) is sent to the target network and a larger first sub-loss function (that is, a larger value of 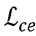 (***x**ᵢ*, **θ**) indicates a more complex sample) is generated, less corresponding pruning needs to be performed, and an obtained sub-network is more complex (as shown in FIG. 4, a larger diamond area indicates a more complex pruned network).

304: The training device performs sparse training on the target convolutional neural network by using the objective loss function to obtain a trained target convolutional neural network, where the sparsening is pruning a convolution kernel of the target convolutional neural network based on the value of the channel importance function.

After constructing the corresponding objective loss function, the training device performs sparse training on the target convolutional neural network by using the objective loss function to obtain the trained target convolutional neural network. The sparsening is pruning the convolution kernel of the target convolutional neural network based on the value of the channel importance function, and is specifically pruning a convolution kernel whose value of an importance degree is less than the second threshold.

It should be noted that, in some implementations of this application, a plurality of manners may be used to determine, based on the training sample, an extent to which the target convolutional neural network is trained by using the foregoing constructed objective loss function. The following provides some termination conditions for stopping training the target convolutional neural network, including but not limited to the following.
(1) The objective loss function reaches the preset threshold.

After the objective loss function is constructed in the foregoing manner, a threshold (for example, 0.03) may be set for the objective loss function in advance. In a process of performing iterative sparse training on the target convolutional neural network, after each training is completed, it is determined whether a value that is obtained in a current round of training and that is of the objective loss function reaches the threshold. If the value does not reach the threshold, the training continues, or if the value reaches the preset threshold, the training ends. In this case, a value of a network parameter of the target convolutional neural network that is determined in the current round of training is used as a value of a network parameter of the finally trained target convolutional neural network.

(2) The objective loss function begins to converge.

After the objective loss function is constructed in the foregoing manner, iterative sparse training may be performed on the target convolutional neural network. If a difference between a value that is obtained in a current round of training and that is of the objective loss function and a value that is obtained in a previous round of training and that is of the objective loss function falls within a preset range (for example, within 0.01), it is considered that the objective loss function converges, and the training may be terminated. In this case, a value of a network parameter of the target convolutional neural network that is determined in the current round of training is used as a value of a network parameter of the finally trained target convolutional neural network.

(3) The training reaches a preset quantity of times.

In this manner, a quantity of iterations (for example, 1000 times) for performing sparse training on the target convolutional neural network may be preconfigured. After the objective loss function is constructed in the foregoing manner, iterative sparse training may be performed on the target convolutional neural network. After each round of training ends, a value of a network parameter of the target convolutional neural network that corresponds to the round is stored until a quantity of iterations of sparse training reaches the preset quantity of times. Then, the target convolutional neural network obtained in each round may be verified by using test data. A value of a network parameter with best performance is selected as a value of a final network parameter of the target convolutional neural network, or a network parameter of a target convolutional neural network that is obtained through last training is used as the value of the final network parameter of the target convolutional neural network.

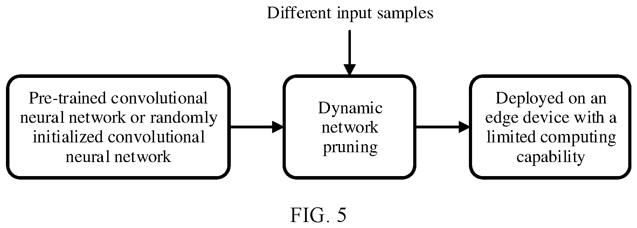

Finally, in some implementations of this application, the target convolutional neural network obtained through sparse training may be deployed on a target device, for example, may be deployed on an edge device with a limited computing capability, such as a mobile phone or an intelligent wearable device (for example, a smart band or a smart watch). For example, as shown in FIG. 5, when a pre-trained convolutional neural network or a randomly initialized convolutional neural network needs to be deployed on the edge device with the limited computing capability, a network computing amount can be reduced by using the convolutional neural network pruning processing method provided in this embodiment of this application. In this way, an inference process on the edge device is accelerated. In the convolutional neural network pruning processing method provided in this embodiment of this application, dynamic pruning can be implemented for each input sample.

It should be noted that, in the foregoing implementation of this application, a method for constructing the objective loss function when the value of the first sub-loss function does not reach the first threshold (that is, 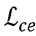 (***x**ᵢ*, **θ**) ≤ *C*) is described. In some other implementations of this application, if the value of the first sub-loss function reaches the first threshold (that is, 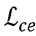 (***x**ᵢ*, **θ**) > *C*), it is considered that a corresponding training sample is a complex sample. In this case, the value of the dynamic weight is 0, that is, shown in the following formula (4): $λ \left({x}_{i}, θ\right) = 0 , and {L}_{ce} \left({x}_{i}, θ\right) > C$ (4)

Because when 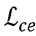 (**x***ᵢ*, **θ**)> *C*, *λ*(**x***ᵢ*, **θ**) = 0, and the second sub-loss function is also 0. It represents that when the training sample is the complex sample, the target convolutional neural network does not need to be pruned. Otherwise, a prediction result is affected. In this case, the constructed objective loss function may be shown in the following formula (5): ${L}_{T} = {min}_{θ} \left({\sum }_{i = 1}^{N} {L}_{ce} \left({x}_{i}, θ\right)\right)$ (5)

In conclusion, for any input training sample, a variable β may be defined, and the variable β may be shown in the following formula (6): ${β}_{i} = \left\{\begin{matrix}1 , & {L}_{ce} \left({x}_{i}, θ\right) \leq C , \\ 0 , & {L}_{ce} \left({x}_{i}, θ\right) > C .\end{matrix}\right.$ (6)

Then, the dynamic weight may be shown in the following formula (7): $λ \left({x}_{i}, θ\right) = λ ′ ⋅ {β}_{i} \frac{C - {L}_{ce} \left({x}_{i}, θ\right)}{C}$ (7)

Therefore, the constructed objective loss function may be shown in the following formula (8): $\begin{matrix}{L}_{T} & = {min}_{θ} \left({\sum }_{i = 1}^{N} \left({L}_{ce}\left({x}_{i}, θ\right)+λ\left({x}_{i}, θ\right)⋅{\sum }_{l = 1}^{L} {\left‖{π}^{l}\left({x}_{i}\right)\right‖}_{1}\right)\right) \\ & = {min}_{θ} \left(\begin{matrix}{\sum }_{i = 1}^{N} {L}_{ce} \left({x}_{i}, θ\right) \\ + λ ′ ⋅ {\sum }_{i = 1}^{N} \left({β}_{i}\left(\frac{C - {L}_{ce} \left({x}_{i}, θ\right)}{C}\right)⋅{\sum }_{l = 1}^{L} {\left‖{π}^{l}\left({x}_{i}\right)\right‖}_{1}\right)\end{matrix}\right)\end{matrix}$ (8)

In conclusion, in the foregoing implementation of this application, sparse training is performed on the convolutional neural network by constructing the new objective loss function. The newly constructed objective loss function includes two sub-loss functions. The first sub-loss function is used to measure complexity of the training sample, and the second sub-loss function is used to measure complexity of a pruned sub-network that processes the training sample. The complexity of the network is obtained based on the channel importance function and the dynamic weight. When the value of the first sub-loss function does not reach the first threshold, the complexity of the training sample is high, the value of the dynamic weight is small (inverse correlation), sparsity of the channel importance function obtained through training is small, and less pruning is performed. In other words, in a pruning process, the complexity of the sample is fully utilized to customize a corresponding sub-network structure for each training sample. In this way, each training sample is flexibly pruned. Redundancy in the convolutional neural network can be mined to a maximum extent, so that a training sample with high complexity is input to a sub-network with a large capacity for prediction.

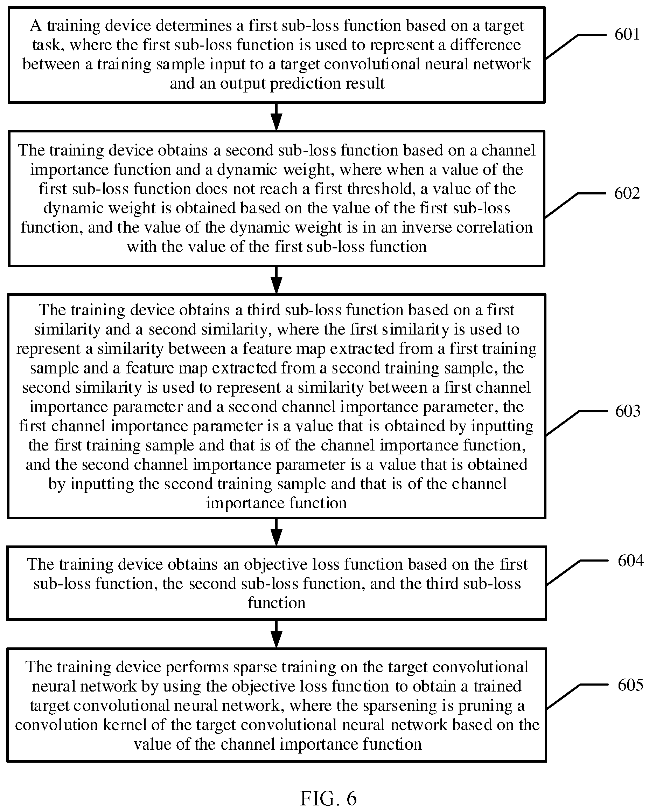

In addition, in some implementations of this application, in addition to the complexity of the sample, both the complexity of the sample and a similarity between samples may be further considered. In other words, it is not only expected that the training sample with the high complexity is input to the sub-network with the large capacity for prediction, but also expected that similar training samples can be input to similar sub-networks (that is, similar pruning is performed) for prediction. FIG. 6 is another schematic flowchart of a convolutional neural network pruning processing method according to an embodiment of this application. The method may specifically include the following steps.

601: A training device determines a first sub-loss function based on a target task, where the first sub-loss function represents a difference between a training sample input to a target convolutional neural network and an output prediction result.

602: The training device obtains a second sub-loss function based on a channel importance function and a dynamic weight, where when a value of the first sub-loss function does not reach a first threshold, a value of the dynamic weight is obtained based on the value of the first sub-loss function, and the value of the dynamic weight is in an inverse correlation with the value of the first sub-loss function.

In this embodiment of this application, step 601 and step 602 are similar to step 301 and step 302 in the foregoing embodiment. For details, refer to step 301 and step 302. Details are not described herein again.

603: The training device obtains a third sub-loss function based on a first similarity and a second similarity, where the first similarity represents a similarity between a feature map extracted from a first training sample and a feature map extracted from a second training sample, the second similarity represents a similarity between a first channel importance parameter and a second channel importance parameter, the first channel importance parameter is a value that is obtained by inputting the first training sample and that is of the channel importance function, and the second channel importance parameter is a value that is obtained by inputting the second training sample and that is of the channel importance function.

In addition to that the sample is mapped to complexity space, a similarity between training samples may also help customize proper sub-network structures for different training samples. In other words, it is expected that similar training samples may be input to similar sub-networks. Therefore, in addition to determining the first sub-loss function based on the target task and obtaining the second sub-loss function based on the channel importance function and the dynamic weight, the training device may further obtain a third sub-loss function based on a first similarity and a second similarity. The first similarity represents a similarity between a feature map extracted from a first training sample and a feature map extracted from a second training sample, and the second similarity represents a similarity between a first channel importance parameter and a second channel importance parameter. The first channel importance parameter is a value that is obtained by inputting the first training sample and that is of the channel importance function, and specifically represents an importance degree that is of each convolution kernel in the target convolutional neural network and that is on the first training sample. The second channel importance parameter is a value that is obtained by inputting the second training sample and that is of the channel importance function, and specifically represents an importance degree that is of each convolution kernel in the target convolutional neural network and that is on the second training sample. The first training sample and the second training sample are separately any two samples in a training set.

Specifically, in this embodiment of this application, a middle-layer feature map *F^{l}*(**x***ᵢ*) generated by using the convolutional neural network for a training sample is used as a representation of the training sample **x***ᵢ*, and a channel importance function **π***^{l}*(**x***ᵢ*) is used as a representation of a network structure. A representation form of a similarity between different sub-networks may be represented by using the following formula (9): ${T}^{l} \left[i, j\right] = \frac{{π}^{l} \left({x}_{i}\right) ⋅ {π}^{l} \left({x}_{j}\right)}{{\left‖{π}^{l}\left({x}_{i}\right)\right‖}_{2} ⋅ {\left‖{π}^{l}\left({x}_{j}\right)\right‖}_{2}}$ (9)

*l* represents any layer of the target convolutional neural network, that is, *l* ∈ [1, *L*]; L is a total quantity of layers of the target convolutional neural network; **x***ᵢ* is the input first training sample; **x***ⱼ* is the input second training sample; and *T^{l}*[*i,j*] is the foregoing second similarity, and may be specifically used to represent a cosine similarity between a first channel importance parameter **π***^{l}*(**x***ᵢ*) and a second channel importance parameter **π***^{l}*(**x***ⱼ*). It should be noted that, that the second similarity is represented as the cosine similarity is merely an example. In some other implementations of this application, the second similarity may alternatively be represented as another similarity. Examples are not provided herein again.

In addition, a representation form of a similarity between feature maps output by layers of the target convolutional neural network for different training samples may be represented by using the following formula (10): ${R}^{l} \left[i, j\right] = \frac{p \left({F}^{l}\left({x}_{i}\right)\right) ⋅ p \left({F}^{l}\left({x}_{j}\right)\right)}{{\left‖p\left({F}^{l}\left({x}_{i}\right)\right)\right‖}_{2} ⋅ {\left‖p\left({F}^{l}\left({x}_{j}\right)\right)\right‖}_{2}}$ (10)

*l* represents any layer of the target convolutional neural network, that is, *l* ∈ [1*, L*]; L is the total quantity of layers of the target convolutional neural network; **x***ᵢ* is the input first training sample; **x***ⱼ* is the input second training sample; *p*(·) is a pooling operation (for example, average pooling or maximum pooling); and *R^{l}*[*i, j*] is the foregoing first similarity, and may be specifically used to represent a cosine similarity between a feature map *F^{l}*(**x***ᵢ*) extracted from the first training sample and a feature map *F^{l}*(**x***ⱼ*) extracted from the second training sample. It should be noted that, that the first similarity is represented as the cosine similarity is merely an example. In some other implementations of this application, the first similarity may alternatively be represented as another similarity. Examples are not provided herein again.

Based on the foregoing formula (9) and formula (10), in some implementations of this application, a specific implementation of obtaining the third sub-loss function based on the first similarity and the second similarity may be: after the first similarity *R^{l}*[*i, j*] and the second similarity *T^{l}*[*i, j*] are separately converted into one-dimensional vectors (for example, the pooling operation), using a distance function between the first similarity *R^{l}*[*i, j*] and the second similarity *T^{l}*[*i, j*] as the third sub-loss function, which may be specifically represented by using the following formula (11): ${L}_{sim} \left(X, θ\right) = {\sum }_{l = 1}^{L} dis \left({T}^{l}, {R}^{l}\right)$ (11)

*l* represents any layer of the target convolutional neural network, that is, *l* ∈ [1, *L*]; L is the total quantity of layers of the target convolutional neural network; 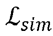 (*X,* **θ**) is the third sub-loss function; and *dis*(*T^{l}*, *R^{l}*) is the distance function between the first similarity *R^{l}*[*i, j*] and the second similarity *T^{l}*[*i, j*].

It should be noted that, in some implementations of this application, a last-layer feature map *F^{L}*(***x**ᵢ*) generated by the convolutional neural network for the training sample may be used as the representation of the training sample **x***ᵢ*, and a last-layer channel importance parameter **π***^{L}*(**x***ᵢ*) is used as the representation of the network structure. In this case, the representation form of the similarity between different sub-networks may be represented by using the following formula (12): ${T}^{L} \left[i, j\right] = \frac{{π}^{L} \left({x}_{i}\right) ⋅ {π}^{L} \left({x}_{j}\right)}{{\left‖{π}^{L}\left({x}_{i}\right)\right‖}_{2} ⋅ {\left‖{π}^{L}\left({x}_{j}\right)\right‖}_{2}}$ (12)

L is a last layer of the target convolutional neural network; **x***ᵢ* is the input first training sample; **x***ⱼ* is the input second training sample; and *T^{L}*[*i, j*] is the foregoing second similarity, and may be specifically used to represent a cosine similarity between a first channel importance parameter **π***^{L}*(**x***ᵢ*) and a second channel importance parameter **π***^{L}*(**x***ⱼ*).

Similarly, a representation form of a similarity between feature maps output by the last layer of the target convolutional neural network for different training samples may be represented by using the following formula (13): ${R}^{L} \left[i, j\right] = \frac{p \left({F}^{L}\left({x}_{i}\right)\right) ⋅ p \left({F}^{L}\left({x}_{j}\right)\right)}{{\left‖p\left({F}^{L}\left({x}_{i}\right)\right)\right‖}_{2} ⋅ {\left‖p\left({F}^{L}\left({x}_{j}\right)\right)\right‖}_{2}}$ (13)

L is the last layer of the target convolutional neural network; **x***ᵢ* is the input first training sample; **x***ⱼ* is the input second training sample; *p*(·) is the pooling operation (for example, average pooling or maximum pooling); and *R^{L}*[*i, j*] is the foregoing first similarity, and may be specifically used to represent a cosine similarity between a last-layer feature map *F^{L}*(**x***ᵢ*) extracted from the first training sample and a last-layer feature map *F^{L}*(***x**ⱼ*) extracted from the second training sample.

Based on the foregoing formula (12) and formula (13), in some implementations of this application, a specific implementation of obtaining the third sub-loss function based on the first similarity and the second similarity may be represented by using the following formula (14): ${L}_{sim} \left(X, θ\right) = dis \left({T}^{L}, {R}^{L}\right)$ (14)

L is the last layer of the target convolutional neural network; 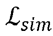 (*X,* **θ**) is the third sub-loss function; and *dis*(*T^{L}*, *R^{L}*) is a distance function between the first similarity *R^{L}*[*i, j*] and the second similarity *T^{L}*[*i, j*].

It should be noted that, in this embodiment of this application, steps of obtaining, by the training device, the second sub-loss function and the third sub-loss function may not be fixed. In other words, the training device may perform step 602 before performing step 603. Alternatively, the training device may perform step 603 before performing step 602. Alternatively, the training device may perform step 602 and step 603 at the same time. This is not specifically limited in this application.

604: The training device obtains the objective loss function based on the first sub-loss function, the second sub-loss function, and the third sub-loss function.

After determining the expression of the first sub-loss function, the expression of the second sub-loss function, and an expression of the third sub-loss function, the training device may obtain the objective loss function based on the first sub-loss function, the second sub-loss function, and the third sub-loss function. Specifically, in some implementations of this application, the objective loss function may be obtained by adding the first sub-loss function, the second sub-loss function, and a first product result, where the first product result is a result obtained by multiplying the third sub-loss function by a preset coefficient (which may be referred to as a first preset coefficient *γ*). Therefore, in this embodiment of this application, an expression of the objective loss function may be represented in the following formula (15): ${L}_{T} = {min}_{θ} \left({\sum }_{i = 1}^{N} \begin{matrix}\left({L}_{ce}\left({x}_{i}, θ\right)+λ\left({x}_{i}, θ\right)⋅{\sum }_{l = 1}^{L} {\left‖{π}^{l}\left({x}_{i}\right)\right‖}_{1}\right) \\ + γ ⋅ {L}_{sim} \left(X, θ\right)\end{matrix}\right)$ (15)

N is the total quantity of training samples in the training set, **x***ᵢ* is the currently input training sample, 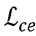 (***x**ᵢ*, **θ**) is the first sub-loss function, $λ \left({x}_{i}, θ\right) ⋅ {\sum }_{l = 1}^{L} {\left‖{π}^{l}\left({x}_{i}\right)\right‖}_{1}$ is the second sub-loss function, 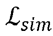 (*X,* **θ**) is the third sub-loss function, and *γ* is the first preset coefficient (which is a hyperparameter).

605: The training device performs sparse training on the target convolutional neural network by using the objective loss function to obtain a trained target convolutional neural network, where the sparsening is pruning a convolution kernel of the target convolutional neural network based on the value of the channel importance function.

In this embodiment of this application, step 605 is similar to step 304 in the foregoing embodiment. For details, refer to step 304. Details are not described herein again.

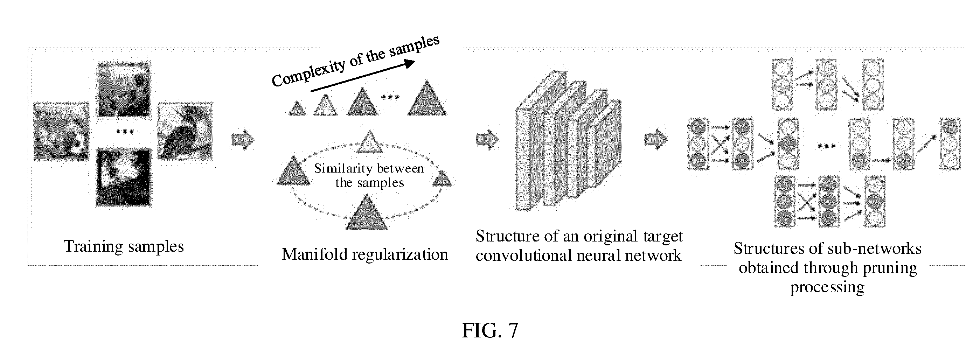

In conclusion, the convolutional neural network pruning processing method in the embodiment corresponding to FIG. 6 explores the similarity between the samples from two perspectives of the complexity of the sample and the similarity between the samples, to mine network redundancy corresponding to any instance to a maximum extent. FIG. 7 shows a corresponding sub-network structure customized for each training sample by using manifold information of a training sample according to an embodiment of this application. The manifold information includes two angles: complexity of the sample and a similarity between samples. The pruning processing method is a dynamic pruning method, and a dynamic network with a fast inference speed is obtained by deleting different convolution kernels for different input data. The network may be more conveniently deployed to a device (such as a mobile phone, a watch, or a robot) with a limited computing capability to process a related target task (such as classification, segmentation, and detection) such as an image, a text, and a voice.

It should be noted that, in some implementations of this application, pruning processing may alternatively be performed by considering only the similarity between the samples. A processing manner is similar to a processing manner in which the similarity between the samples is considered in FIG. 6. Details are not described herein again.

### 2. Inference phase

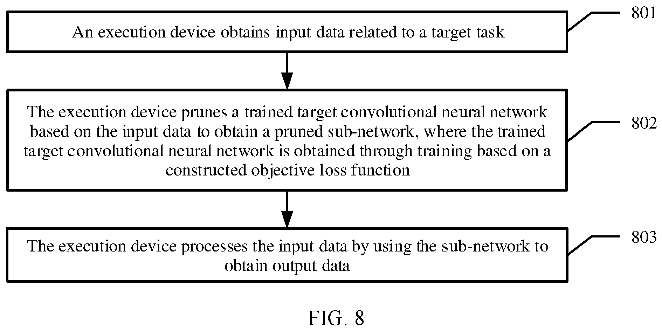

In this embodiment of this application, the inference phase is a process in which the execution device 210 processes the target task by using the trained convolutional neural network 201 in FIG. 2. FIG. 8 is a schematic flowchart of a data processing method according to an embodiment of this application. The method specifically includes the following steps.

801: An execution device obtains input data related to a target task.

First, the execution device obtains the to-be-processed input data, where the input data is related to the to-be-processed target task. For example, when the target task is a classification task, the input data is data used for classification.

It should be noted that in this embodiment of this application, the input data may be image data, audio data, or text data (not covered by the claims), and a data type of the input data is determined by a to-be-processed target task.

802: The execution device prunes a trained target convolutional neural network based on the input data to obtain a pruned sub-network, where the trained target convolutional neural network is obtained through training based on a constructed objective loss function.

Then, the execution device prunes the trained target convolutional neural network based on the input data and a pruning rate to obtain the pruned sub-network, where the trained target convolutional neural network is obtained through training based on the objective loss function constructed in the embodiment corresponding to FIG. 3 or the embodiment corresponding to FIG. 6.

For example, if the trained target convolutional neural network is obtained through training based on the objective loss function constructed in the embodiment corresponding to FIG. 3, the objective loss function is obtained based on a first sub-loss function and a second sub-loss function. The first sub-loss function is determined based on the target task, and the second sub-loss function is determined based on a channel importance function and a dynamic weight. The first sub-loss function represents a difference between a training sample input to the target convolutional neural network and an output prediction result. When a value of the first sub-loss function does not reach a first threshold, a value of the dynamic weight is obtained based on the value of the first sub-loss function. The value of the dynamic weight is in an inverse correlation with the value of the first sub-loss function. Specifically, in some implementations of this application, the dynamic weight may be represented by *λ*(**x***ᵢ*, **θ**), and the first threshold may be represented by C. Similarly, **x***ᵢ* is the input training sample, θ is a network parameter of the entire target convolutional neural network, and *λ*(.) is an expression of the dynamic weight. An implementation in which the value of the dynamic weight *λ*(**x***ᵢ*, **θ**) is obtained based on the value of the first sub-loss function may be: In a case of 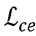 (***x**ᵢ*, **θ**) ≤ *C,* the value of the dynamic weight *λ*(**x***ᵢ*, **θ**) is obtained by multiplying a first ratio $\frac{C - {L}_{ce} \left({x}_{i}, θ\right)}{C}$ by a second preset coefficient *λ*'. The first ratio $\frac{C - {L}_{ce} \left({x}_{i}, θ\right)}{C}$ is a ratio of a first difference *C -* 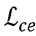 (***x**ᵢ*, **θ**) to the first threshold C, and the first difference *C -* 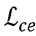 (***x**ᵢ,* **θ**) is a difference between the first threshold C and the value of the first sub-loss function 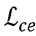 (***x**ᵢ,* **θ**). In some other implementations of this application, when the value of the first sub-loss function reaches the first threshold (that is, 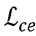 (***x**ᵢ*, **θ**) > *C),* the value of the dynamic weight is 0 (that is, *λ*(**x***ᵢ*, **θ**) = 0).

For another example, if the trained target convolutional neural network is obtained through training based on the objective loss function constructed in the embodiment corresponding to FIG. 6, the objective loss function may be specifically obtained based on a first sub-loss function, a second sub-loss function, and a third sub-loss function. The first sub-loss function is determined based on the target task, the second sub-loss function is determined based on a channel importance function and a dynamic weight, and the third sub-loss function is determined based on a first similarity and a second similarity. The first sub-loss function represents a difference between a training sample input to the target convolutional neural network and an output prediction result. When a value of the first sub-loss function does not reach a first threshold, a value of the dynamic weight is obtained based on the value of the first sub-loss function. The value of the dynamic weight is in an inverse correlation with the value of the first sub-loss function. The first similarity represents a similarity between a feature map extracted from a first training sample and a feature map extracted from a second training sample, and the second similarity represents a similarity between a first channel importance parameter and a second channel importance parameter. The first channel importance parameter is a value that is obtained by inputting the first training sample and that is of the channel importance function, and the second channel importance parameter is a value that is obtained by inputting the second training sample and that is of the channel importance function. The first training sample and the second training sample are any two different samples in a training set

In this embodiment of this application, for details about how the trained target convolutional neural network is obtained through training based on the constructed objective loss function, refer to related description in embodiments corresponding to FIG. 3 and FIG. 6. Details are not described herein again.

It should be noted that, in some implementations of this application, a specific implementation of pruning, by the execution device, the trained target convolutional neural network based on the input data to obtain the pruned sub-network may alternatively be: pruning the trained target convolutional neural network based on the input data and the pruning rate to obtain the pruned sub-network, where the pruning rate is a proportion of a pruned convolution kernel to all convolution kernels in the target neural network. In this embodiment of this application, the pruning rate is a proportion of the pruned convolution kernel to all the convolution kernels in the target convolutional neural network. For example, it is assumed that there are 100 convolution kernels in the target convolutional neural network (that is, a quantity of channels is 100). If the pruning rate is 30%, 30 channels need to be pruned, and the network can be dynamically pruned for different input data by using the method and based on a learned channel importance function **π***^{l}*(**x***ᵢ*).

For ease of understanding of the foregoing step 802, an example is used in the following: It is assumed that *N* pieces of input data ${\left\{{x}_{i}\right\}}_{i = 1}^{N}$ are given, and average importance of the convolution kernels (that is, the channels) in the trained target convolutional neural network for different input data is denoted as ${\overline{π}}^{l} = \left\{{\overline{π}}^{l}\left[1\right],{\overline{π}}^{l}\left[2\right],…,{\overline{π}}^{l}\left[{c}^{l}\right]\right\}$. *c^{l}* is a quantity of channels at an l^{th} layer of the target convolutional neural network. For example, N = 100, each piece of input data corresponds to one piece of channel importance **π***^{l}*(**x***ᵢ*), and there are 100 pieces of **π***^{l}*(**x***ᵢ*) in total. An average value is first obtained for the 100 pieces of **π***^{l}*(**x***ᵢ*) to obtain **π̅***^{l}*. **π̅***^{l}* is a one-dimensional vector including *l* elements, and each element corresponds to one convolution kernel (that is, a channel). The elements of **π̅***^{l}* are sorted as *π̅^{l}* [1] ≤ *π̅^{l}* [2] ≤... ≤ **π̅***^{l}*[*c^{l}*], and a threshold *ξ^{l}* = **π***^{l}*[[*ηc^{l}*]] may be obtained, where *η* is a predefined pruning rate (for example, if the quantity of channels is 100 and the pruning rate is 30%, 30 channels need to be pruned). In the inference process, only a channel whose value of the channel importance function is larger than the threshold *ξ^{l}* needs to be retained. A channel whose value of the channel importance function is smaller than the threshold *ξ^{l}* is pruned, which means that a feature corresponding to the channel is a redundant feature and may be skipped. Based on the threshold *ξ^{l}*, different input data corresponds to different actual pruning manners of the network, and finally, networks with different calculation costs for different input data may be obtained.

803: The execution device processes the input data by using the sub-network to obtain output data.

Finally, the execution device processes the input data by using the sub-network obtained through pruning processing to obtain the output data (that is, the prediction result).

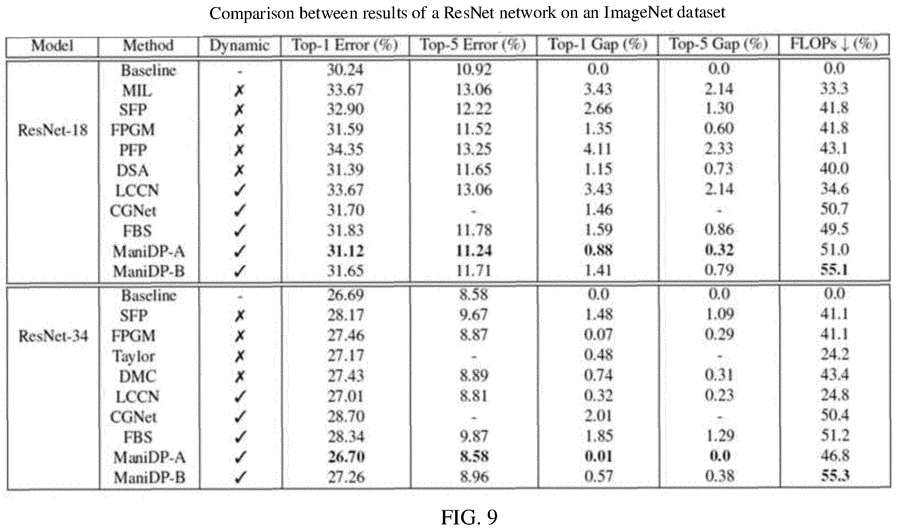

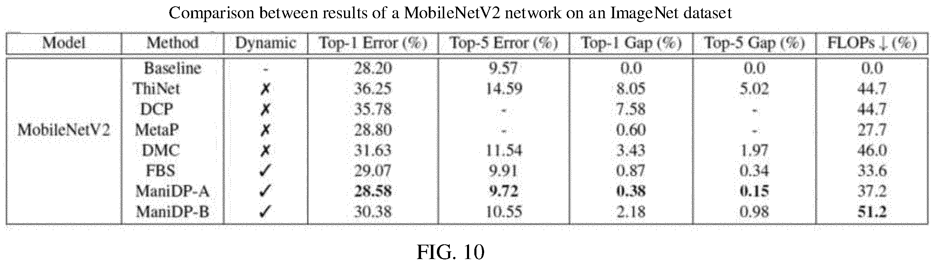

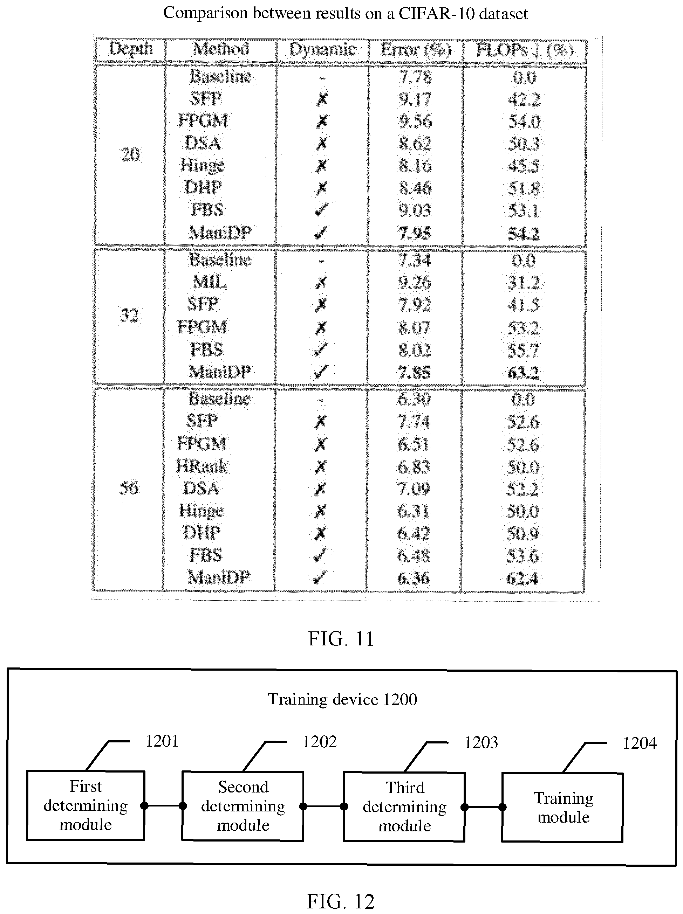

To have more intuitive understanding of beneficial effects brought by embodiments of this application, the following further compares technical effects brought by embodiments of this application. Specifically, the pruning method in this application is compared with an existing pruning method. Experimental results are shown in FIG. 9, FIG. 10, and FIG. 11. FIG. 9 is a diagram of comparison between results, obtained through classification by using a pruning method according to this application, of a ResNet network on an ImageNet dataset, and results, obtained through classification by using an existing pruning method, of the ResNet network on the ImageNet dataset. FIG. 10 is a diagram of comparison between results, obtained through classification by using a pruning method according to this application, of a MobileNetV2 network on an ImageNet dataset, and results, obtained through classification by using an existing pruning method, of the MobileNetV2 network on the ImageNet dataset. FIG. 11 is a diagram of comparison between results of a pruning method according to this application on a CIFAR-10 dataset and results of an existing pruning method on the CIFAR-10 dataset. Both ManiDP-A and ManiDP-B in FIG. 9 to FIG. 11 are methods in this application, and correspond to different pruning rates, where the pruning rate of ManiDP-A is less than the pruning rate of ManiDP-B.

Based on the foregoing embodiments, the following further provides a related device used to implement the solutions, to better implement the solutions in embodiments of this application. FIG. 12 is a schematic diagram of a training device according to an embodiment of this application. The training device 1200 may specifically include a first determining module 1201, a second determining module 1202, a third determining module 1203, and a training module 1204. The first determining module 1201 is configured to determine a first sub-loss function based on a target task. The first sub-loss function represents a difference between a training sample input to a target convolutional neural network and an output prediction result, the target convolutional neural network is a convolutional neural network used for training, the target convolutional neural network has different network parameters and loss functions in training processes for different training samples, and the training sample is any sample in a training set. The second determining module 1202 is configured to obtain a second sub-loss function based on a channel importance function and a dynamic weight. When a value of the first sub-loss function does not reach a first threshold, a value of the dynamic weight is obtained based on the value of the first sub-loss function. The value of the dynamic weight is in an inverse correlation with the value of the first sub-loss function. The third determining module 1203 is configured to obtain an objective loss function based on the first sub-loss function and the second sub-loss function. The training module 1204 is configured to perform sparse training on the target convolutional neural network by using the objective loss function to obtain a trained target convolutional neural network. The sparsening is pruning a convolution kernel of the target convolutional neural network based on a value of the channel importance function.

In a possible design, the third determining module 1203 is specifically configured to add the first sub-loss function and the second sub-loss function to obtain the objective loss function.

In a possible design, the second determining module 1202 is further configured to obtain a third sub-loss function based on a first similarity and a second similarity. The first similarity represents a similarity between a feature map extracted from a first training sample and a feature map extracted from a second training sample, and the second similarity represents a similarity between a first channel importance parameter and a second channel importance parameter. The first channel importance parameter is a value that is obtained by inputting the first training sample and that is of the channel importance function, and the second channel importance parameter is a value that is obtained by inputting the second training sample and that is of the channel importance function. The first training sample and the second training sample are any two different samples in the training set.

In this case, the third determining module 1203 is further specifically configured to obtain the objective loss function based on the first sub-loss function, the second sub-loss function, and the third sub-loss function.

In a possible design, the second determining module 1202 is further specifically configured to: after separately converting the first similarity and the second similarity into one-dimensional vectors, use a distance function between the first similarity and the second similarity as the third sub-loss function.

In a possible design, the first similarity specifically represents a cosine similarity between the feature map extracted from the first training sample and the feature map extracted from the second training sample; and the second similarity specifically represents a cosine similarity between the first channel importance parameter and the second channel importance parameter.

In a possible design, the third determining module 1203 is further specifically configured to add the first sub-loss function, the second sub-loss function, and a first product result to obtain the objective loss function. The first product result is a result obtained by multiplying the third sub-loss function by a first preset coefficient.

In a possible design, that a value of the dynamic weight is obtained based on the value of the first sub-loss function includes: obtaining the value of the dynamic weight by multiplying a first ratio by a second preset coefficient. The first ratio is a ratio of a first difference to the first threshold, and the first difference is a difference between the first threshold and the value of the first sub-loss function.

In a possible design, the second determining module 1202 is specifically configured to multiply the channel importance function by the dynamic weight to obtain the second sub-loss function.

In a possible design, when the value of the first sub-loss function reaches the first threshold, the value of the dynamic weight is 0.

In a possible design, the first determining module 1201 is specifically configured to: when the target task is a classification task, determine a cross-entropy loss function as the first sub-loss function.

In a possible design, the training module 1204 is further configured to deploy the trained target convolutional neural network on a target device, for example, may be deployed on an edge device with a limited computing capability, such as a mobile phone or an intelligent wearable device (for example, a smart band or a smart watch).

It should be noted that content such as information exchange and an execution process between the modules/units in the training device 1200 is based on a same concept as the method embodiment corresponding to FIG. 3 or FIG. 6 in this application. For specific content, refer to the description in the foregoing method embodiments in this application. Details are not described herein again.

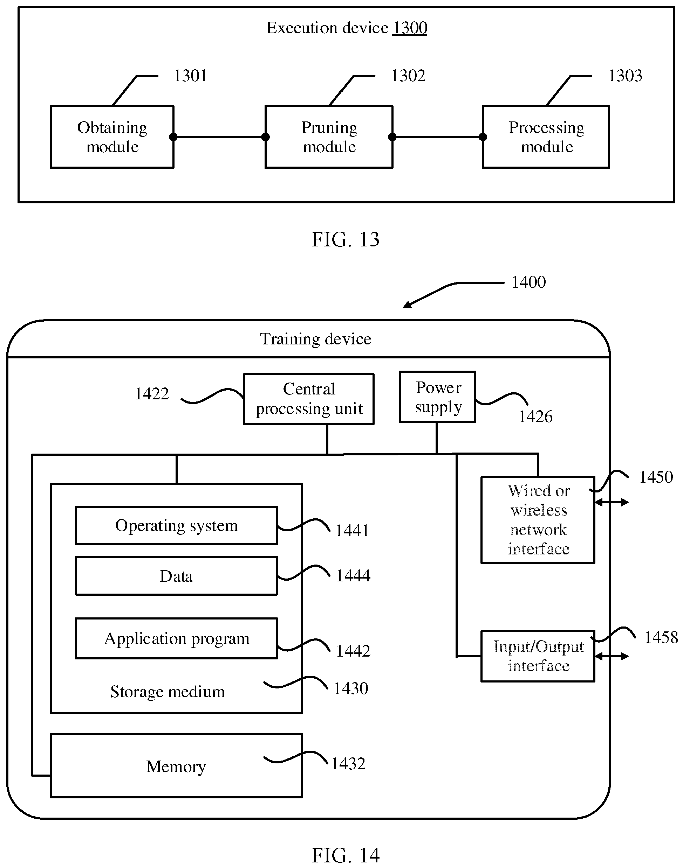

An embodiment of this application further provides an execution device. FIG. 13 is a schematic diagram of an execution device according to an embodiment of this application. The execution device 1300 may specifically include an obtaining module 1301, a pruning module 1302, and a processing module 1303. The obtaining module 1301 is configured to obtain input data related to a target task. The pruning module 1302 is configured to prune a trained target convolutional neural network based on the input data to obtain a pruned sub-network. The trained target convolutional neural network is obtained through training by using an objective loss function, the objective loss function is obtained based on a first sub-loss function and a second sub-loss function, the first sub-loss function is determined based on the target task, the second sub-loss function is determined based on a channel importance function and a dynamic weight, and the first sub-loss function represents a difference between a training sample input to the target convolutional neural network and an output prediction result. When a value of the first sub-loss function does not reach a first threshold, a value of the dynamic weight is obtained based on the value of the first sub-loss function. The value of the dynamic weight is in an inverse correlation with the value of the first sub-loss function, the objective loss function is used to perform sparsening on the target convolutional neural network during training of the target convolutional neural network, and the sparsening is pruning a convolution kernel of the target convolutional neural network based on a value of the channel importance function. The processing module 1303 is configured to process the input data by using the sub-network to obtain output data.

In a possible design, the pruning module 1302 is specifically configured to prune the trained target convolutional neural network based on the input data and a pruning rate to obtain the pruned sub-network. The pruning rate is a proportion of the pruned convolution kernel to all convolution kernels in the target neural network.

In a possible design, that a value of the dynamic weight is obtained based on the value of the first sub-loss function includes: obtaining the value of the dynamic weight by multiplying a first ratio by a second preset coefficient. The first ratio is a ratio of a first difference to the first threshold, and the first difference is a difference between the first threshold and the value of the first sub-loss function.

In a possible design, when the value of the first sub-loss function reaches the first threshold, the value of the dynamic weight is 0.

In a possible design, the input data may be any one of image data, audio data, or text data.

It should be noted that content such as information exchange and an execution process between the modules/units in the execution device 1300 is based on a same concept as the method embodiment corresponding to FIG. 8 in this application. For specific content, refer to the description in the foregoing method embodiments in this application. Details are not described herein again.

The following describes another training device provided in an embodiment of this application. FIG. 14 is a schematic diagram of a structure of a training device according to an embodiment of this application. The training device 1200 described in the embodiment corresponding to FIG. 12 may be deployed on the training device 1400, and is configured to implement a function of the training device 1200 in the embodiment corresponding to FIG. 12. Specifically, the training device 1400 is implemented by one or more servers. The training device 1400 may have a large difference due to different configurations or performance, and may include one or more central processing units (central processing units, CPUs) 1422, a memory 1432, and one or more storage media 1430 (for example, one or more massive storage devices) that store an application program 1442 or data 1444. The memory 1432 and the storage medium 1430 may be transient storage or persistent storage. The program stored in the storage medium 1430 may include one or more modules (not shown in the figure), and each module may include a series of instruction operations for the training device 1400. Further, the central processing unit 1422 may be configured to: communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, and/or one or more operating systems 1441 such as Windows ServerTM, Mac OS XTM, UnixTM, LinuxTM and FreeBSDTM.

In this embodiment of this application, the central processing unit 1422 is configured to perform the convolutional neural network pruning processing method performed by the training device in the embodiment corresponding to FIG. 3 or FIG. 6. For example, the central processing unit 1422 may be configured to: first, determine a first sub-loss function based on a target task, where the first sub-loss function represents a difference between a training sample input to a convolutional neural network (that is, a target convolutional neural network) on which pruning processing is to be performed and an output prediction result. For example, when the target task is a classification task, the first sub-loss function may be a cross-entropy loss function. In addition to determining the first sub-loss function based on the target task, the central processing unit 1422 may further obtain a second sub-loss function based on a channel importance function and a dynamic weight; when a value of the first sub-loss function does not reach a preset threshold (which may be referred to as a first threshold), obtain a value of the dynamic weight based on the value of the first sub-loss function, where the value of the dynamic weight is in an inverse correlation with the value of the first sub-loss function; after determining an expression of the first sub-loss function and an expression of the second sub-loss function, obtain an objective loss function based on the first sub-loss function and the second sub-loss function; and finally, perform sparse training on the target convolutional neural network by using the objective loss function to obtain a trained target convolutional neural network.

It should be noted that a specific manner in which the central processing unit 1422 performs the foregoing steps is based on a same concept as the method embodiment corresponding to FIG. 3 or FIG. 6 in this application. Technical effects brought by the central processing unit 1422 are the same as those in the foregoing method embodiments of this application. For specific content, refer to the description in the foregoing method embodiments in this application. Details are not described herein again.

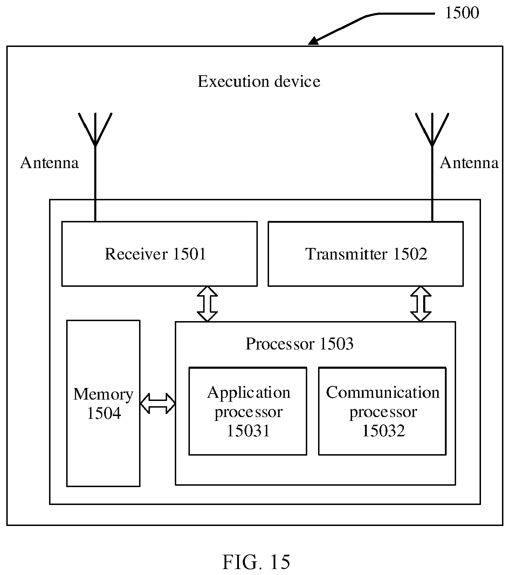

The following describes an execution device provided in an embodiment of this application. FIG. 15 is a schematic diagram of a structure of an execution device according to an embodiment of this application. The execution device 1500 may be specifically represented as various terminal devices, such as a virtual reality VR device, a mobile phone, a tablet computer, a notebook computer, an intelligent wearable device, a monitoring data processing device, or a radar data processing device. The execution device 1300 described in the embodiment corresponding to FIG. 13 may be deployed on the execution device 1500, and is configured to implement a function of the execution device 1300 in the embodiment corresponding to FIG. 13. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data for the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device 1500. In a specific application, the components of the execution device 1500 are coupled together through a bus system. In addition to a data bus, the bus system may further include a power bus, a control bus, a status signal bus, and the like. However, for clear description, various types of buses in the figure are marked as the bus system.

The method disclosed in the embodiment corresponding to FIG. 8 in this application may be applied to the processor 1503, or may be implemented by the processor 1503. The processor 1503 may be an integrated circuit chip, and has a signal processing capability. In an implementation process, steps in the foregoing methods may be implemented by using a hardware integrated logical circuit in the processor 1503, or by using instructions in a form of software. The processor 1503 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1503 may implement or perform the methods, steps, and logic block diagrams disclosed in the embodiment corresponding to FIG. 8 in this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, a register, or the like. The storage medium is located in the memory 1504, and the processor 1503 reads information in the memory 1504 and completes the steps in the foregoing methods in combination with hardware in the processor 1503.

The receiver 1501 may be configured to: receive input digital or character information, and generate a signal input related to a related setting and function control of the execution device 1500. The transmitter 1502 may be configured to output digital or character information through a first interface. The transmitter 1502 may be further configured to send instructions to a disk group through the first interface to modify data in the disk group. The transmitter 1502 may further include a display device such as a display.

In this embodiment of this application, in a case, the processor 1503 is configured to perform corresponding data processing on input data by using a trained target convolutional neural network to obtain corresponding output data (that is, a prediction result). The trained target convolutional neural network may be obtained by using the training method corresponding to FIG. 3 or FIG. 6 in this application. For specific content, refer to the description in the foregoing method embodiments in this application. Details are not described herein again.

The training device or the execution device in embodiments of this application may specifically be a chip. The chip includes a processing unit and a communication unit. The processing unit may be, for example, a processor, and the communication unit may be, for example, an input/output interface, a pin, or a circuit.

Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

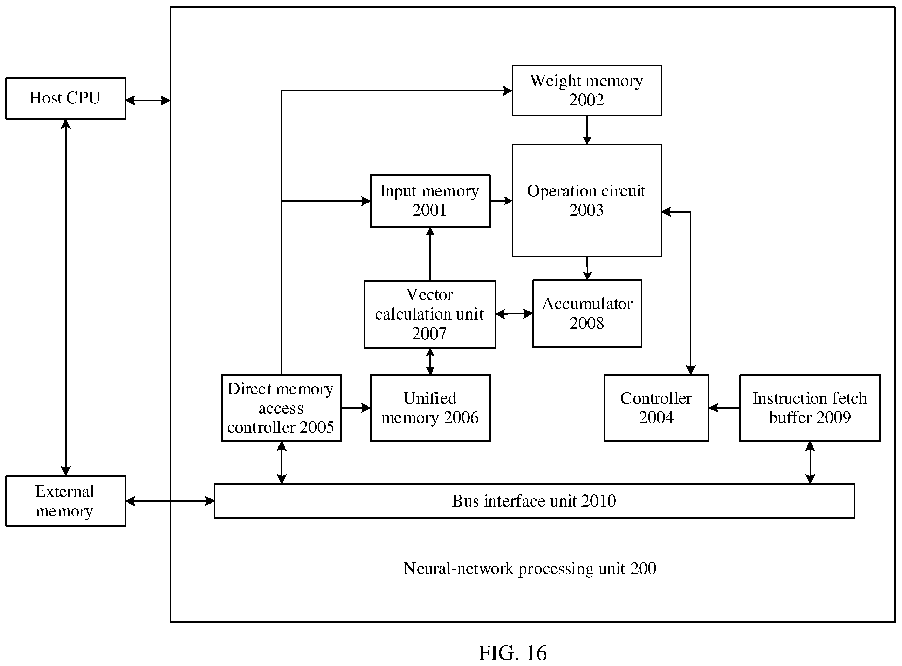

Specifically, FIG. 16 is a schematic diagram of a structure of a chip according to an embodiment of this application. The chip may be represented as a neural-network processing unit NPU 200. The NPU 200 is mounted to a host CPU (host CPU) as a coprocessor, and the host CPU allocates a task. A core part of the NPU is an operation circuit 2003, and a controller 2004 controls the operation circuit 2003 to extract matrix data in a memory and perform a multiplication operation.

In some implementations, the operation circuit 2003 includes a plurality of processing engines (process engine, PE) inside. In some implementations, the operation circuit 2003 is a two-dimensional systolic array. The operation circuit 2003 may alternatively be a one-dimensional systolic array or another electronic circuit that can perform mathematical operations such as multiplication and addition. In some implementations, the operation circuit 2003 is a general-purpose matrix processor.

For example, it is assumed that there is an input matrix A, a weight matrix B, and an output matrix C. The operation circuit fetches data corresponding to the matrix B from a weight memory 2002, and buffers the data on each PE in the operation circuit. The operation circuit fetches data of the matrix A from an input memory 2001, to perform a matrix operation on the matrix B, and stores an obtained partial result or an obtained final result of the matrix into an accumulator (accumulator) 2008.

A unified memory 2006 is configured to store input data and output data. Weight data is directly transferred to the weight memory 2002 by using a direct memory access controller (direct memory access controller, DMAC) 2005. The input data is also transferred to the unified memory 2006 by using the DMAC.

A bus interface unit 2010 (bus interface unit, BIU for short) is configured to interact with the DMAC and an instruction fetch buffer (instruction fetch buffer, IFB) 2009 through an AXI bus.

The bus interface unit 2010 is configured for the instruction fetch buffer 2009 to obtain instructions from an external memory, and is further configured for the direct memory access controller 2005 to obtain original data of the input matrix A or the weight matrix B from the external memory.

The DMAC is mainly configured to transfer input data in the external memory DDR to the unified memory 2006, or transfer the weight data to the weight memory 2002, or transfer the input data to the input memory 2001.

A vector calculation unit 2007 includes a plurality of operation processing units. If required, further processing is performed on an output of the operation circuit, for example, vector multiplication, vector addition, an exponential operation, a logarithmic operation, or size comparison. The vector calculation unit 2007 is mainly configured to perform network calculation at a non-convolutional/fully connected layer in a neural network, for example, batch normalization (batch normalization), pixel-level summation, and upsampling on a feature plane.

In some implementations, the vector calculation unit 2007 can store a processed output vector in the unified memory 2006. For example, the vector calculation unit 2007 may apply a linear function or a non-linear function to the output of the operation circuit 2003, for example, perform linear interpolation on a feature plane extracted at a convolutional layer. For another example, the linear function or the non-linear function is applied to a vector of an accumulated value to generate an activation value. In some implementations, the vector calculation unit 2007 generates a normalized value, a pixel-level sum, or a normalized value and a pixel-level sum. In some implementations, the processed output vector can be used as an activation input of the operation circuit 2003, for example, to be used in a subsequent layer in the neural network.

The instruction fetch buffer (instruction fetch buffer) 2009 connected to the controller 2004 is configured to store instructions used by the controller 2004.

The unified memory 2006, the input memory 2001, the weight memory 2002, and the instruction fetch buffer 2009 are all on-chip memories. The external memory is private for an NPU hardware architecture.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between the modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, an application-specific circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A computer-implemented data processing method, comprising:
obtaining (801) input data related to a target task;
pruning (802) a trained target convolutional neural network based on the input data to obtain a pruned sub-network; and
processing (803) the input data by using the sub-network to obtain output data;
wherein the trained target convolutional neural network is obtained by:
determining (301, 601) a first sub-loss function based on the target task, wherein the first sub-loss function represents a difference between a training sample input to a target convolutional neural network and an output prediction result, the target convolutional neural network is a convolutional neural network used for training, the target convolutional neural network has different network parameters and loss functions in training processes for different training samples, and the training sample is a sample in a training set;
obtaining (302, 602) a second sub-loss function based on a channel importance function and a dynamic weight, wherein when a value of the first sub-loss function does not reach a first threshold, a value of the dynamic weight is obtained based on the value of the first sub-loss function, and the value of the dynamic weight is in an inverse correlation with the value of the first sub-loss function;
obtaining (303, 604) an objective loss function based on the first sub-loss function and the second sub-loss function; and
performing (304, 605) sparse training on the target convolutional neural network by using the objective loss function to obtain the trained target convolutional neural network, wherein the sparse training is pruning a convolution kernel of the target convolutional neural network based on a value of the channel importance function; and
wherein the target task is a target detection task, the target detection task is for detecting a target object in an image, the input data is an input image, the trained target convolutional neural network is pruned based on the input image to obtain the pruned sub-network, target detection is performed on the input image by using the sub-network to obtain a detection result, and the output data is the detection result; or
wherein the target task is a classification task, and wherein the classification task is performed on an image, the input data is an input image, the trained target convolutional neural network is pruned based on the input image to obtain the pruned sub-network, the input image is classified by using the sub-network, and the output data is a classification result of the image, or wherein the classification task is performed on audio, the input data is audio data, the trained target convolutional neural network is pruned based on the audio data to obtain the pruned sub-network, the audio data is classified by using the sub-network, and the output data is an audio classification result.

2. The method according to claim 1, wherein the obtaining (303, 604) an objective loss function based on the first sub-loss function and the second sub-loss function comprises:
adding the first sub-loss function and the second sub-loss function to obtain the objective loss function.

3. The method according to claim 1, wherein before the obtaining (604) an objective loss function based on the first sub-loss function and the second sub-loss function, the method further comprises:
obtaining (603) a third sub-loss function based on a first similarity and a second similarity, wherein the first similarity represents a similarity between a feature map extracted from a first training sample and a feature map extracted from a second training sample, the second similarity represents a similarity between a first channel importance parameter and a second channel importance parameter, the first channel importance parameter is a value that is obtained by inputting the first training sample and that is of the channel importance function, the second channel importance parameter is a value that is obtained by inputting the second training sample and that is of the channel importance function, and the first training sample and the second training sample are two different samples in the training set; and
the obtaining (604) an objective loss function based on the first sub-loss function and the second sub-loss function comprises:
obtaining (604) the objective loss function based on the first sub-loss function, the second sub-loss function, and the third sub-loss function.

4. The method according to claim 3, wherein the obtaining (603) a third sub-loss function based on a first similarity and a second similarity comprises:
using a distance function between the first similarity and the second similarity as the third sub-loss function.

5. The method according to claim 3 or 4, wherein
the first similarity specifically represents a cosine similarity between the feature map extracted from the first training sample and the feature map extracted from the second training sample; and
the second similarity specifically represents a cosine similarity between the first channel importance parameter and the second channel importance parameter.

6. The method according to any one of claims 3 to 5, wherein the obtaining (604) the objective loss function based on the first sub-loss function, the second sub-loss function, and the third sub-loss function comprises:
adding the first sub-loss function, the second sub-loss function, and a first product result to obtain the objective loss function, wherein the first product result is a result obtained by multiplying the third sub-loss function by a first preset coefficient.

7. The method according to any one of claims 1 to 6, wherein the pruning (802) a trained target convolutional neural network based on the input data to obtain a pruned sub-network comprises:
pruning the trained target convolutional neural network based on the input data and a pruning rate to obtain the pruned sub-network, wherein the pruning rate is a proportion of the pruned convolution kernel to all convolution kernels in the target convolutional neural network.

8. The method according to any one of claims 1 to 7, wherein that a value of the dynamic weight is obtained based on the value of the first sub-loss function comprises:
obtaining the value of the dynamic weight by multiplying a first ratio by a second preset coefficient, wherein the first ratio is a ratio of a first difference to the first threshold, and the first difference is a difference between the first threshold and the value of the first sub-loss function.

9. The method according to any one of claims 1 to 8, wherein when the value of the first sub-loss function reaches the first threshold, the value of the dynamic weight is 0.

10. A task processing system (200) comprising an execution device (210, 1300) and a training device (220, 1200),
wherein the execution device (210, 1300) comprises:
an obtaining module (1301), configured to obtain input data related to a target task;
a pruning module (1302), configured to prune a trained target convolutional neural network based on the input data to obtain a pruned sub-network; and
a processing module (1303), configured to process the input data by using the sub-network to obtain output data;
wherein the training device (220, 1200) comprises:
a first determining module (1201), configured to determine a first sub-loss function based on the target task, wherein the first sub-loss function represents a difference between a training sample input to a target convolutional neural network and an output prediction result, the target convolutional neural network is a convolutional neural network used for training, the target convolutional neural network has different network parameters and loss functions in training processes for different training samples, and the training sample is a sample in a training set;
a second determining module (1202), configured to obtain a second sub-loss function based on a channel importance function and a dynamic weight, wherein when a value of the first sub-loss function does not reach a first threshold, a value of the dynamic weight is obtained based on the value of the first sub-loss function, and the value of the dynamic weight is in an inverse correlation with the value of the first sub-loss function;
a third determining module (1203), configured to obtain an objective loss function based on the first sub-loss function and the second sub-loss function; and
a training module (1204), configured to perform sparse training on the target convolutional neural network by using the objective loss function to obtain the trained target convolutional neural network, wherein the sparse training is pruning a convolution kernel of the target convolutional neural network based on a value of the channel importance function;
wherein the target task is a target detection task, the target detection task is for detecting a target object in an image, the input data is an input image, the execution device (210, 1300) is configured to prune the trained target convolutional neural network based on the input image to obtain the pruned sub-network, and to perform target detection on the input image by using the sub-network to obtain a detection result, and the output data is the detection result; or
wherein the target task is a classification task, and wherein the classification task is performed on an image, the input data is an input image, the execution device (210, 1300) is configured to prune the trained target convolutional neural network based on the input image to obtain the pruned sub-network, and to classify the input image by using the sub-network, and the output data is a classification result of the image, or wherein the classification task is performed on audio, the input data is audio data, the execution device (210, 1300) is configured to prune the trained target convolutional neural network based on the audio data to obtain the pruned sub-network, and to classify the audio data by using the sub-network, and the output data is an audio classification result.

11. The task processing system (200) according to claim 10, wherein the third determining module (1203) is specifically configured to:
add the first sub-loss function and the second sub-loss function to obtain the objective loss function.

12. The task processing system (200) according to claim 10, wherein the second determining module (1202) is further configured to:
obtain a third sub-loss function based on a first similarity and a second similarity, wherein the first similarity represents a similarity between a feature map extracted from a first training sample and a feature map extracted from a second training sample, the second similarity represents a similarity between a first channel importance parameter and a second channel importance parameter, the first channel importance parameter is a value that is obtained by inputting the first training sample and that is of the channel importance function, the second channel importance parameter is a value that is obtained by inputting the second training sample and that is of the channel importance function, and the first training sample and the second training sample are any two different samples in the training set; and
the third determining module (1203) is further specifically configured to:
obtain the objective loss function based on the first sub-loss function, the second sub-loss function, and the third sub-loss function.

13. The task processing system (200) according to claim 12, wherein the second determining module (1202) is further specifically configured to:
use a distance function between the first similarity and the second similarity as the third sub-loss function.

14. A computer-readable storage medium, comprising a program, wherein when the program runs on a computer, the computer is enabled to perform the method according to any one of claims 1 to 9.

15. A computer program product comprising instructions, wherein when the computer program product is run on a computer, the computer is enabled to perform the method according to any one of claims 1 to 9.

## Patentansprüche

1. Computerimplementiertes Datenverarbeitungsverfahren, das Folgendes umfasst:
Erhalten (801) von auf eine Zielaufgabe bezogenen Eingabedaten;
Kürzen (802) eines trainierten neuronalen Zielfaltungsnetzes basierend auf den Eingabedaten, um ein gekürztes Teilnetz zu erhalten; und
Verarbeiten (803) der Eingabedaten unter Verwendung des Teilnetzes, um Ausgabedaten zu erhalten;
wobei das trainierte neuronale Zielfaltungsnetz durch Folgendes erhalten wird:
Bestimmen (301, 601) einer ersten Teilverlustfunktion basierend auf der Zielaufgabe, wobei die erste Teilverlustfunktion einen Unterschied zwischen einer Trainingsprobeneingabe in ein neuronales Zielfaltungsnetz und einem Ausgabevorhersageergebnis repräsentiert, das neuronale Zielfaltungsnetz ein neuronales Faltungsnetz ist, das für das Training verwendet wird, das neuronale Zielfaltungsnetz unterschiedliche Netzparameter und Verlustfunktionen in den Trainingsprozessen für unterschiedliche Trainingsproben aufweist und die Trainingsprobe eine Probe in einer Trainingsmenge ist;
Erhalten (302, 602) einer zweiten Teilverlustfunktion basierend auf einer Kanalwichtigkeitsfunktion und einem dynamischen Gewicht, wobei, wenn ein Wert der ersten Teilverlustfunktion einen ersten Schwellenwert nicht erreicht, ein Wert des dynamischen Gewichts basierend auf dem Wert der ersten Teilverlustfunktion erhalten wird und der Wert des dynamischen Gewichts mit dem Wert der ersten Teilverlustfunktion invers korreliert ist;
Erhalten (303, 604) einer objektiven Verlustfunktion basierend auf der ersten Teilverlustfunktion und der zweiten Teilverlustfunktion; und
Ausführen (304, 605) eines spärlichen Trainings an dem neuronalen Zielfaltungsnetz unter Verwendung der objektiven Verlustfunktion, um das trainierte neuronale Zielfaltungsnetz zu erhalten, wobei das spärliche Training das Kürzen eines Faltungskerns des neuronalen Zielfaltungsnetzes basierend auf einem Wert der Kanalwichtigkeitsfunktion ist; und
wobei die Zielaufgabe eine Zieldetektionsaufgabe ist, die Zieldetektionsaufgabe dem Detektieren eines Zielobjekts in einem Bild dient, die Eingabedaten ein Eingabebild sind, das trainierte neuronale Zielfaltungsnetz basierend auf dem Eingabebild gekürzt wird, um das gekürzte Teilnetz zu erhalten, eine Zieldetektion an dem Eingabebild unter Verwendung des Teilnetzes ausgeführt wird, um ein Detektionsergebnis zu erhalten, und die Ausgabedaten das Detektionsergebnis sind; oder
wobei die Zielaufgabe eine Klassifikationsaufgabe ist und wobei die Klassifikationsaufgabe an einem Bild ausgeführt wird, die Eingabedaten ein Eingabebild sind, das trainierte neuronale Zielfaltungsnetz basierend auf dem Eingabebild gekürzt wird, um das gekürzte Teilnetz zu erhalten, das Eingabebild unter Verwendung des Teilnetzes klassifiziert wird und die Ausgabedaten ein Klassifikationsergebnis des Bildes sind, oder wobei die Klassifikationsaufgabe an Ton ausgeführt wird, die Eingabedaten Audiodaten sind, das trainierte neuronale Zielfaltungsnetz basierend auf den Audiodaten gekürzt wird, um das gekürzte Teilnetz zu erhalten, die Audiodaten unter Verwendung des Teilnetzes klassifiziert werden und die Ausgabedaten ein Audioklassifikationsergebnis sind.

2. Verfahren nach Anspruch 1, wobei das Erhalten (303, 604) einer objektiven Verlustfunktion basierend auf der ersten Teilverlustfunktion und der zweiten Teilverlustfunktion Folgendes umfasst:
Addieren der ersten Teilverlustfunktion und der zweiten Teilverlustfunktion, um die objektive Verlustfunktion zu erhalten.

3. Verfahren nach Anspruch 1, wobei das Verfahren vor dem Erhalten (604) einer objektiven Verlustfunktion basierend auf der ersten Teilverlustfunktion und der zweiten Teilverlustfunktion ferner Folgendes umfasst:
Erhalten (603) einer dritten Teilverlustfunktion basierend auf einer ersten Ähnlichkeit und einer zweiten Ähnlichkeit, wobei die erste Ähnlichkeit eine Ähnlichkeit zwischen einem Merkmalskennfeld, das aus einer ersten Trainingsprobe extrahiert wird, und einem Merkmalskennfeld, das aus einer zweiten Trainingsprobe extrahiert wird, repräsentiert, wobei die zweite Ähnlichkeit eine Ähnlichkeit zwischen einem ersten Kanalwichtigkeitsparameter und einem zweiten Kanalwichtigkeitsparameter repräsentiert, der erste Kanalwichtigkeitsparameter ein Wert ist, der durch das Eingeben der ersten Trainingsprobe erhalten wird und der von der Kanalwichtigkeitsfunktion ist, der zweite Kanalwichtigkeitsparameter ein Wert ist, der durch Eingeben der zweiten Trainingsprobe erhalten wird und der von der Kanalwichtigkeitsfunktion ist, und die erste Trainingsprobe und die zweite Trainingsprobe zwei unterschiedliche Proben in der Trainingsmenge sind; und
das Erhalten (604) einer objektiven Verlustfunktion basierend auf der ersten Teilverlustfunktion und der zweiten Teilverlustfunktion Folgendes umfasst:
Erhalten (604) der objektiven Verlustfunktion basierend auf der ersten Teilverlustfunktion, der zweiten Teilverlustfunktion und der dritten Teilverlustfunktion.

4. Verfahren nach Anspruch 3, wobei das Erhalten (603) einer dritten Teilverlustfunktion basierend auf einer ersten Ähnlichkeit und einer zweiten Ähnlichkeit Folgendes umfasst:
Verwenden einer Abstandsfunktion zwischen der ersten Ähnlichkeit und der zweiten Ähnlichkeit als die dritte Teilverlustfunktion.

5. Verfahren nach Anspruch 3 oder 4, wobei
die erste Ähnlichkeit spezifisch eine Kosinus-Ähnlichkeit zwischen dem Merkmalskennfeld, das aus der ersten Trainingsprobe extrahiert wird, und dem Merkmalskennfeld, das aus der zweiten Trainingsprobe extrahiert wird, repräsentiert; und
die zweite Ähnlichkeit spezifisch eine Kosinus-Ähnlichkeit zwischen dem ersten Kanalwichtigkeitsparameter und dem zweiten Kanalwichtigkeitsparameter repräsentiert.

6. Verfahren nach einem der Ansprüche 3 bis 5, wobei das Erhalten (604) der objektiven Verlustfunktion basierend auf der ersten Teilverlustfunktion, der zweiten Teilverlustfunktion und der dritten Teilverlustfunktion Folgendes umfasst:
Addieren der ersten Teilverlustfunktion, der zweiten Teilverlustfunktion und eines ersten Produktergebnisses, um die objektive Verlustfunktion zu erhalten, wobei das erste Produktergebnis ein Ergebnis ist, das durch das Multiplizieren der dritten Teilverlustfunktion mit einem ersten vorgegebenen Koeffizienten erhalten wird.

7. Verfahren nach einem der Ansprüche 1 bis 6, wobei das Kürzen (802) eines trainierten neuronalen Zielfaltungsnetzes basierend auf den Eingabedaten, um ein gekürztes Teilnetz zu erhalten, Folgendes umfasst:
Kürzen des trainierten neuronalen Zielfaltungsnetzes basierend auf den Eingabedaten und einer Kürzungsrate, um das gekürzte Teilnetz zu erhalten, wobei die Kürzungsrate ein Anteil des gekürzten Faltungskerns an allen Faltungskernen in dem neuronalen Zielfaltungsnetz ist.

8. Verfahren nach einem der Ansprüche 1 bis 7, wobei, dass ein Wert des dynamischen Gewichts basierend auf dem Wert der ersten Teilverlustfunktion erhalten wird, Folgendes umfasst:
Erhalten des Werts des dynamischen Gewichts durch das Multiplizieren eines ersten Verhältnisses mit einem zweiten vorgegebenen Koeffizienten, wobei das erste Verhältnis ein Verhältnis eines ersten Unterschieds von dem ersten Schwellenwert ist und der erste Unterschied ein Unterschied zwischen dem ersten Schwellenwert und dem Wert der ersten Teilverlustfunktion ist.

9. Verfahren nach einem der Ansprüche 1 bis 8, wobei, wenn der Wert der ersten Teilverlustfunktion den ersten Schwellenwert erreicht, der Wert des dynamischen Gewichts 0 ist.

10. Aufgabenverarbeitungssystem (200), das eine Ausführungsvorrichtung (210, 1300) und eine Trainingsvorrichtung (220, 1200) umfasst,
wobei die Ausführungsvorrichtung (210, 1300) Folgendes umfasst:
ein Erhaltemodul (1301), das konfiguriert ist, auf eine Zielaufgabe bezogene Eingabedaten zu erhalten;
ein Kürzungsmodul (1302), das konfiguriert ist, ein trainiertes neuronales Zielfaltungsnetz basierend auf den Eingabedaten zu kürzen, um ein gekürztes Teilnetz zu erhalten; und
ein Verarbeitungsmodul (1303), das konfiguriert ist, die Eingabedaten unter Verwendung des Teilnetzes zu verarbeiten, um Ausgabedaten zu erhalten;
wobei die Trainingsvorrichtung (220, 1200) Folgendes umfasst:
ein erstes Bestimmungsmodul (1201), das konfiguriert ist, eine erste Teilverlustfunktion basierend auf der Zielaufgabe zu bestimmen, wobei die erste Teilverlustfunktion einen Unterschied zwischen einer Trainingsprobeneingabe in ein neuronales Zielfaltungsnetz und einem Ausgabevorhersageergebnis repräsentiert, das neuronale Zielfaltungsnetz ein neuronales Faltungsnetz ist, das für das Training verwendet wird, das neuronale Zielfaltungsnetz unterschiedliche Netzparameter und Verlustfunktionen in den Trainingsprozessen für unterschiedliche Trainingsproben aufweist, und die Trainingsprobe eine Probe in einer Trainingsmenge ist;
ein zweites Bestimmungsmodul (1202), das konfiguriert ist, eine zweite Teilverlustfunktion basierend auf einer Kanalwichtigkeitsfunktion und einem dynamischen Gewicht zu erhalten, wobei, wenn ein Wert der ersten Teilverlustfunktion einen ersten Schwellenwert nicht erreicht, ein Wert des dynamischen Gewichts basierend auf dem Wert der ersten Teilverlustfunktion erhalten wird und der Wert des dynamischen Gewichts mit dem Wert der ersten Teilverlustfunktion invers korreliert ist;
ein drittes Bestimmungsmodul (1203), das konfiguriert ist, eine objektive Verlustfunktion basierend auf der ersten Teilverlustfunktion und der zweiten Teilverlustfunktion zu erhalten; und
ein Trainingsmodul (1204), das konfiguriert ist, ein spärliches Training an dem neuronalen Zielfaltungsnetz unter Verwendung der objektiven Verlustfunktion auszuführen, um das trainierte neuronale Zielfaltungsnetz zu erhalten, wobei das spärliche Training ein Kürzen eines Faltungskerns des neuronalen Zielfaltungsnetzes basierend auf einem Wert der Kanalwichtigkeitsfunktion ist;
wobei die Zielaufgabe eine Zieldetektionsaufgabe ist, die Zieldetektionsaufgabe dem Detektieren eines Zielobjekts in einem Bild dient, die Eingabedaten ein Eingabebild sind, die Ausführungsvorrichtung (210, 1300) konfiguriert ist, das trainierte neuronale Zielfaltungsnetz basierend auf dem Eingabebild zu kürzen, um das gekürzte Teilnetz zu erhalten, und eine Zieldetektion an dem Eingabebild unter Verwendung des Teilnetzes auszuführen, um ein Detektionsergebnis zu erhalten, und die Ausgabedaten das Detektionsergebnis sind; oder
wobei die Zielaufgabe eine Klassifikationsaufgabe ist und wobei die Klassifikationsaufgabe an einem Bild ausgeführt wird, die Eingabedaten ein Eingabebild sind, die Ausführungsvorrichtung (210, 1300) konfiguriert ist, das trainierte neuronale Zielfaltungsnetz basierend auf dem Eingabebild zu kürzen, um das gekürzte Teilnetz zu erhalten, und das Eingabebild unter Verwendung des Teilnetzes zu klassifizieren, und die Ausgabedaten ein Klassifikationsergebnis des Bildes sind, oder wobei die Klassifikationsaufgabe an Ton ausgeführt wird, die Eingabedaten Audiodaten sind, die Ausführungsvorrichtung (210, 1300) dazu ausgelegt ist, das trainierte neuronale Zielfaltungsnetz basierend auf den Audiodaten zu kürzen, um das gekürzte Teilnetz zu erhalten, und die Audiodaten unter Verwendung des Teilnetzes zu klassifizieren, und die Ausgabedaten ein Audioklassifikationsergebnis sind.

11. Aufgabenverarbeitungssystem (200) nach Anspruch 10, wobei das dritte Bestimmungsmodul (1203) spezifisch konfiguriert ist:
die erste Teilverlustfunktion und die zweite Teilverlustfunktion zu addieren, um die objektive Verlustfunktion zu erhalten.

12. Aufgabenverarbeitungssystem (200) nach Anspruch 10, wobei das zweite Bestimmungsmodul (1202) ferner konfiguriert ist:
eine dritte Teilverlustfunktion basierend auf einer ersten Ähnlichkeit und einer zweiten Ähnlichkeit zu erhalten, wobei die erste Ähnlichkeit eine Ähnlichkeit zwischen einem Merkmalskennfeld, das aus einer ersten Trainingsprobe extrahiert wird, und einem Merkmalskennfeld, das aus einer zweiten Trainingsprobe extrahiert wird, repräsentiert, wobei die zweite Ähnlichkeit eine Ähnlichkeit zwischen einem ersten Kanalwichtigkeitsparameter und einem zweiten Kanalwichtigkeitsparameter repräsentiert, der erste Kanalwichtigkeitsparameter ein Wert ist, der durch das Eingeben der ersten Trainingsprobe erhalten wird und der von der Kanalwichtigkeitsfunktion ist, der zweite Kanalwichtigkeitsparameter ein Wert ist, der durch das Eingeben der zweiten Trainingsprobe erhalten wird und der von der Kanalwichtigkeitsfunktion ist, und die erste Trainingsprobe und die zweite Trainingsprobe irgendwelche zwei unterschiedliche Proben in der Trainingsmenge sind; und
das dritte Bestimmungsmodul (1203) ferner spezifisch konfiguriert ist:
die objektive Verlustfunktion basierend auf der ersten Teilverlustfunktion, der zweiten Teilverlustfunktion und der dritten Teilverlustfunktion zu erhalten.

13. Aufgabenverarbeitungssystem (200) nach Anspruch 12, wobei das zweite Bestimmungsmodul (1202) ferner spezifisch konfiguriert ist:
eine Abstandsfunktion zwischen der ersten Ähnlichkeit und der zweiten Ähnlichkeit als die dritte Teilverlustfunktion zu verwenden.

14. Computerlesbares Speichermedium, das ein Programm umfasst, wobei, wenn das Programm auf einem Computer ausgeführt wird, der Computer in die Lage versetzt wird, das Verfahren nach einem der Ansprüche 1 bis 9 auszuführen.

15. Computerprogrammprodukt, das Anweisungen umfasst, wobei, wenn das Computerprogrammprodukt auf einem Computer ausgeführt wird, der Computer in die Lage versetzt wird, das Verfahren nach einem der Ansprüche 1 bis 9 auszuführen.

## Revendications

1. Procédé de traitement de données mis en œuvre par ordinateur, le procédé comprenant les étapes suivantes :
obtenir (801) des données d'entrée liées à une tâche cible ;
élaguer (802) un réseau neuronal convolutif cible entraîné sur la base des données d'entrée pour obtenir un sous-réseau élagué ; et
traiter (803) les données d'entrée en utilisant le sous-réseau afin d'obtenir des données de sortie ;
où le réseau neuronal convolutionnel cible entraîné est obtenu par les étapes suivantes :
déterminer (301, 601) une première sous-fonction de perte basée sur la tâche cible, la première sous-fonction de perte représentant une différence entre une entrée d'échantillon d'entraînement vers un réseau neuronal convolutionnel cible et un résultat de prédiction de sortie, le réseau neuronal convolutionnel cible étant un réseau neuronal convolutionnel utilisé pour l'entraînement, le réseau neuronal convolutionnel cible ayant différents paramètres de réseau et fonctions de perte dans des processus d'entraînement pour différents échantillons d'entraînement, et l'échantillon d'entraînement étant un échantillon dans un ensemble d'entraînement ;
obtenir (302, 602) une deuxième sous-fonction de perte sur la base d'une fonction d'importance de canal et un poids dynamique, où, lorsqu'une valeur de la première sous-fonction de perte n'atteint pas un premier seuil, une valeur du poids dynamique est obtenue sur la base de la valeur de la première sous-fonction de perte, et la valeur du poids dynamique présente une corrélation inverse avec la valeur de la première sous-fonction de perte ;
obtenir (303, 604) une fonction de perte objective sur la base de la première sous-fonction de perte et la deuxième sous-fonction de perte ; et
réaliser (304, 605) un entraînement épars sur le réseau neuronal convolutionnel cible en utilisant la fonction de perte objective pour obtenir le réseau neuronal convolutionnel cible entraîné, où l'entraînement épars comprend d'élaguer un noyau de convolution du réseau neuronal convolutionnel cible sur la base d'une valeur de la fonction d'importance de canal ; et
où la tâche cible est une tâche de détection de cible, la tâche de détection de cible est destinée à détecter un objet cible dans une image, les données d'entrée sont une image d'entrée, le réseau neuronal convolutionnel cible entraîné est élagué sur la base de l'image d'entrée pour obtenir le sous-réseau élagué, la détection de cible est effectuée sur l'image d'entrée en utilisant le sous-réseau pour obtenir un résultat de détection, et les données de sortie sont le résultat de détection ; ou
où la tâche cible est une tâche de classification, et où la tâche de classification est effectuée sur une image, les données d'entrée sont une image d'entrée, le réseau neuronal convolutionnel cible entraîné est élagué sur la base de l'image d'entrée pour obtenir le sous-réseau élagué, l'image d'entrée est classifiée en utilisant le sous-réseau, et les données de sortie sont un résultat de classification de l'image ou, où la tâche de classification est exécutée sur de l'audio, les données d'entrée sont des données audio, le réseau neuronal convolutionnel cible entraîné est élagué sur la base des données audio pour obtenir le sous-réseau élagué, les données audio sont classifiées en utilisant le sous-réseau, et les données de sortie sont un résultat de classification audio.

2. Procédé selon la revendication 1, dans lequel l'obtention (303, 604) d'une fonction de perte objective sur la base de la première sous-fonction de perte et de la deuxième sous-fonction de perte comprend l'étape suivante :
ajouter la première sous-fonction de perte et la deuxième sous-fonction de perte pour obtenir la fonction de perte objective.

3. Procédé selon la revendication 1, dans lequel, avant l'obtention (604) d'une fonction de perte objective sur la base de la première sous-fonction de perte et de la deuxième sous-fonction de perte, le procédé comprend en outre les étapes suivantes :
obtenir (603) une troisième sous-fonction de perte sur la base d'une première similarité et d'une deuxième similarité, où la première similarité représente une similarité entre une carte de caractéristiques extraite d'un premier échantillon d'entraînement et une carte de caractéristiques extraite d'un deuxième échantillon d'entraînement, la deuxième similarité représente une similarité entre un premier paramètre d'importance de canal et un deuxième paramètre d'importance de canal, le premier paramètre d'importance de canal est une valeur obtenue en entrant le premier échantillon d'entraînement et qui est de la fonction d'importance de canal, le deuxième paramètre d'importance de canal est une valeur obtenue en entrant le deuxième échantillon d'entraînement et qui est de la fonction d'importance de canal, et le premier échantillon d'entraînement et le deuxième échantillon d'entraînement sont deux échantillons différents dans l'ensemble d'entraînement ; et
l'obtention (604) d'une fonction de perte objective sur la base de la première sous-fonction de perte et de la deuxième sous-fonction de perte comprend l'étape suivante :
obtenir (604) la fonction de perte objective sur la base de la première sous-fonction de perte, de la deuxième sous-fonction de perte et de la troisième sous-fonction de perte.

4. Procédé selon la revendication 3, dans lequel l'obtention (603) d'une troisième sous-fonction de perte sur la base d'une première similarité et d'une deuxième similarité comprend :
l'utilisation d'une fonction de distance entre la première similarité et la deuxième similarité comme troisième sous-fonction de perte.

5. Procédé selon la revendication 3 ou la revendication 4, dans lequel
la première similarité représente spécifiquement une similarité cosinusoïdale entre la carte de caractéristiques extraite du premier échantillon d'entraînement et la carte de caractéristiques extraite du deuxième échantillon d'entraînement ; et
la deuxième similarité représente spécifiquement une similarité cosinusoïdale entre le premier paramètre d'importance de canal et le deuxième paramètre d'importance de canal.

6. Procédé selon l'une quelconque des revendications 3 à 5, dans lequel l'obtention (604) de la fonction de perte objective sur la base de la première sous-fonction de perte, de la deuxième sous-fonction de perte et de la troisième sous-fonction de perte comprend l'étape suivante :
ajouter la première sous-fonction de perte, la deuxième sous-fonction de perte et un premier résultat de produit pour obtenir la fonction de perte objective, le premier résultat de produit étant un résultat obtenu en multipliant la troisième sous-fonction de perte par un premier coefficient prédéterminé.

7. Procédé selon l'une quelconque des revendications 1 à 6, dans lequel l'élagage (802) d'un réseau neuronal convolutionnel cible entraîné sur la base des données d'entrée pour obtenir un sous-réseau élagué comprend :
l'élagage du réseau neuronal convolutionnel cible entraîné sur la base des données d'entrée et d'un taux d'élagage pour obtenir le sous-réseau élagué, le taux d'élagage étant une proportion du noyau de convolution élagué par rapport à tous les noyaux de convolution dans le réseau neuronal convolutionnel cible.

8. Procédé selon l'une quelconque des revendications 1 à 7, dans lequel le fait qu'une valeur de poids dynamique soit obtenue sur la base de la valeur de la première sous-fonction de perte comprend :
l'obtention de la valeur du poids dynamique par une multiplication d'un premier ratio par un deuxième coefficient prédéterminé, où le premier ratio est un rapport entre une première différence et le premier seuil et la première différence est une différence entre le premier seuil et la valeur de la première sous-fonction de perte.

9. Procédé selon l'une quelconque des revendications 1 à 8, dans lequel, lorsque la valeur de la première sous-fonction de perte atteint le premier seuil, la valeur du poids dynamique est 0.

10. Système de traitement de tâches (200) comprenant un dispositif d'exécution (210, 1300) et un dispositif d'entraînement (220, 1200),
où le dispositif d'exécution (210, 1300) comprend :
un module d'obtention (1301), configuré pour obtenir des données d'entrée relatives à une tâche cible ;
un module d'élagage (1302), configuré pour élaguer un réseau neuronal convolutionnel cible entraîné sur la base des données d'entrée afin d'obtenir un sous-réseau élagué ; et
un module de traitement (1303), configuré pour traiter les données d'entrée en utilisant le sous-réseau pour obtenir des données de sortie ;
où le dispositif d'entraînement (220, 1200) comprend :
un premier module de détermination (1201), configuré pour déterminer une première sous-fonction de perte basée sur la tâche cible, la première sous-fonction de perte représentant une différence entre une entrée d'échantillon d'entraînement vers un réseau neuronal convolutionnel cible et un résultat de prédiction de sortie, le réseau neuronal convolutionnel cible étant un réseau neuronal convolutionnel utilisé pour l'entraînement, le réseau neuronal convolutionnel cible ayant différents paramètres de réseau et fonctions de perte dans des processus d'entraînement pour différents échantillons d'entraînement, et l'échantillon d'entraînement étant un échantillon dans un ensemble d'entraînement ;
un deuxième module de détermination (1202), configuré pour obtenir une deuxième sous-fonction de perte sur la base d'une fonction d'importance de canal et un poids dynamique, où, lorsqu'une valeur de la première sous-fonction de perte n'atteint pas un premier seuil, une valeur du poids dynamique est obtenue sur la base de la valeur de la première sous-fonction de perte, et la valeur du poids dynamique présente une corrélation inverse avec la valeur de la première sous-fonction de perte ;
un troisième module de détermination (1203), configuré pour obtenir une fonction de perte objective basée sur la première sous-fonction de perte et la deuxième sous-fonction de perte ; et
un module d'entraînement (1204), configuré pour réaliser un entraînement épars sur le réseau neuronal convolutionnel cible en utilisant la fonction de perte objective pour obtenir le réseau neuronal convolutionnel cible entraîné, où l'entraînement épars comprend d'élaguer un noyau de convolution du réseau neuronal convolutionnel cible sur la base d'une valeur de la fonction d'importance de canal ;
où la tâche cible est une tâche de détection de cible, la tâche de détection de cible est destinée à détecter un objet cible dans une image, les données d'entrée sont une image d'entrée, le dispositif d'exécution (210, 1300) est configuré pour élaguer le réseau neuronal convolutionnel cible entraîné sur la base de l'image d'entrée pour obtenir le sous-réseau élagué, et pour effectuer une détection de cible sur l'image d'entrée en utilisant le sous-réseau pour obtenir un résultat de détection, et les données de sortie sont le résultat de détection ; ou
où la tâche cible est une tâche de classification, et où la tâche de classification est réalisée sur une image, les données d'entrée sont une image d'entrée, le dispositif d'exécution (210, 1300) est configuré pour élaguer le réseau neuronal convolutionnel cible entraîné à partir de l'image d'entrée pour obtenir le sous-réseau élagué et pour classifier l'image d'entrée en utilisant le sous-réseau, et les données de sortie sont un résultat de classification de l'image ou, où la tâche de classification est exécutée sur de l'audio, les données d'entrée sont des données audio, le dispositif d'exécution (210, 1300) est configuré pour élaguer le réseau neuronal convolutionnel cible entraîné sur la base des données audio afin d'obtenir le sous-réseau élagué, et pour classifier les données audio à l'aide du sous-réseau, et les données de sortie sont un résultat de classification audio.

11. Système de traitement de tâches (200) selon la revendication 10, dans lequel le troisième module de détermination (1203) est spécifiquement configuré pour :
ajouter la première sous-fonction de perte et la deuxième sous-fonction de perte pour obtenir la fonction de perte objective.

12. Système de traitement de tâches (200) selon la revendication 10, dans lequel le deuxième module de détermination (1202) est en outre configuré pour :
obtenir une troisième sous-fonction de perte sur la base d'une première similarité et d'une deuxième similarité, où la première similarité représente une similarité entre une carte de caractéristiques extraite d'un premier échantillon d'entraînement et une carte de caractéristiques extraite d'un deuxième échantillon d'entraînement, la deuxième similarité représente une similarité entre un premier paramètre d'importance de canal et un deuxième paramètre d'importance de canal, le premier paramètre d'importance de canal est une valeur obtenue en entrant le premier échantillon d'entraînement et qui est de la fonction d'importance de canal, le deuxième paramètre d'importance de canal est une valeur obtenue en entrant le deuxième échantillon d'entraînement et qui est de la fonction d'importance de canal, et le premier échantillon d'entraînement et le deuxième échantillon d'entraînement sont deux quelconques échantillons différents dans l'ensemble d'entraînement ; et
le troisième module de détermination (1203) est en outre spécifiquement configuré pour :
obtenir la fonction de perte objective sur la base de la première sous-fonction de perte, de la deuxième sous-fonction de perte et de la troisième sous-fonction de perte.

13. Système de traitement de tâches (200) selon la revendication 12, dans lequel le deuxième module de détermination (1202) est en outre spécifiquement configuré pour :
utiliser une fonction de distance entre la première similarité et la deuxième similarité comme troisième sous-fonction de perte.

14. Support de stockage lisible par ordinateur, comprenant un programme, où, lorsque le programme est exécuté sur un ordinateur, l'ordinateur peut réaliser le procédé selon l'une quelconque des revendications 1 à 9.

15. Produit programme informatique comprenant des instructions, où, lorsque le produit programme informatique est exécuté sur un ordinateur, l'ordinateur peut exécuter le procédé selon l'une quelconque des revendications 1 à 9.
